# EUROPEAN PATENT APPLICATION

(11) **EP 4 465 576 A1**
(43) Date of publication of application: **20.11.2024**
(21) Application number: 23752232.1
(22) Date of filing: 13.01.2023
(51) Int. Cl.: H04L 5/00

(54) **COMMUNICATION METHOD AND COMMUNICATION DEVICE**

(30) Priority: 11.02.2022 CN 202210130429
(71) Applicant: Huawei Technologies Co., Ltd., Shenzhen, Guangdong 518129 (CN)
(72) Inventor: XU, Li, Shenzhen, Guangdong 518129 (CN); ZHONG, Qiwen, Shenzhen, Guangdong 518129 (CN)
(74) Representative: Körber, Martin Hans
(86) International application number: PCT/CN2023/072056
(87) International publication number: WO 2023/151452

(57) **Abstract**

This application provides a communication method and a communication apparatus, to reduce costs and reduce power consumption, so as to improve communication efficiency. In the method, the communication apparatus determines a transmission cycle. The transmission cycle includes a first time domain location and a second time domain location that do not overlap each other in time domain, the first time domain location is for carrying data sent by the communication apparatus, and the second time domain location is for carrying data received by the communication apparatus. The communication apparatus sends first data at the first time domain location of the transmission cycle, and the communication apparatus receives second data at the second time domain location of the transmission cycle.

## Description

This application claims priority to Chinese Patent Application No. 202210130429.7, filed with the China National Intellectual Property Administration on February 11, 2022, and entitled "COMMUNICATION METHOD AND COMMUNICATION APPARATUS", which is incorporated herein by reference in its entirety.

### TECHNICAL FIELD

This application relates to the field of Ethernet communication technologies, and in particular, to a communication method and a communication apparatus.

### BACKGROUND

Ethernet (Ethernet) is a computer local area network technology that is currently widely used. Standards related to 802.1 and IEEE 802.3 standard ethernet (standard ethernet, StdE) defined by the institute of electrical and electronics engineers (institute of electrical and electronics engineers, IEEE) are widely referenced in the industry.

Currently, in a data transmission process based on the Ethernet technology, bidirectional transmission of data is supported. However, in a scenario of the bidirectional transmission, an echo cancellation (echo cancellation, EC) technology and a hybrid (hybrid) technology with isolation are usually depended on. For example, in a process of bidirectional communication between two nodes, after a data signal sent by a node A arrives at a node B, a reflection signal is generated due to collision between the data signal and a receiving component in the node B, affecting a data signal sent by the node B to the node A. In the EC technology, the reflection signal is eliminated based on an EC component, an algorithm, and the like. In addition, in the hybrid technology, in a process of bidirectional communication, isolation of sent data of a node from received data of the node is enabled based on a coupler with isolation. Therefore, based on the EC technology and the hybrid technology, mutual impact between the sent data and the received data can be reduced.

However, in the foregoing implementation process, in the process of the bidirectional communication implemented based on the EC technology and the hybrid technology, a new component needs to be added. As a result, device power consumption is excessively high, and communication efficiency is affected.

### SUMMARY

This application provides a communication method and a communication apparatus. Mutual impact between sent data and received data of the communication apparatus can be reduced without adding a new component. In comparison with a process of bidirectional communication implemented based on an EC technology and a hybrid technology, a process of bidirectional communication provided in the communication method can reduce costs and reduce power consumption, to improve communication efficiency.

A first aspect of this application provides a communication method. The method is performed by a communication apparatus, the method is performed by some components (such as a processor, a chip, or a chip system) in a communication apparatus, or the method is implemented by a logical module or software that can implement all or some functions of a communication apparatus. In the first aspect and possible implementations of the first aspect, an example in which the communication method is performed by a communication apparatus is used for description. The communication apparatus may be a device such as a router, a switch, a virtual machine, a home gateway device, an optical line terminal (optical line terminal, OLT) device, or a terminal entity (such as a camera, a sensor, or a server). In the method, the communication apparatus determines a transmission cycle. The transmission cycle includes a first time domain location and a second time domain location that do not overlap each other in time domain, the first time domain location is for carrying data sent by the communication apparatus, and the second time domain location is for carrying data received by the communication apparatus. The communication apparatus sends first data at the first time domain location of the transmission cycle, and the communication apparatus receives second data at the second time domain location of the transmission cycle.

Based on the foregoing technical solution, after the communication apparatus determines the transmission cycle, the communication apparatus sends the first data at the first time domain location of the transmission cycle, and the communication apparatus receives the second data at the second time domain location of the transmission cycle. The transmission cycle includes the first time domain location and the second time domain location that do not overlap each other in time domain. To be specific, the communication apparatus separately performs a data sending process and a data receiving process at the time domain locations that do not overlap each other in the transmission cycle. In other words, in a process in which the communication apparatus implements bidirectional communication based on the transmission cycle, the time domain location carrying the sent data of the communication apparatus and the time domain location carrying the received data of the communication apparatus are the time domain locations that do not overlap each other, so that the sent data of the communication apparatus and the received data of the communication apparatus are isolated from each other in time domain. Therefore, because mutual impact between the sent data and the received data of the communication apparatus can be reduced without adding a new component, in comparison with a process of bidirectional communication implemented based on an EC technology and a hybrid technology, the process of bidirectional communication provided in the method can reduce costs and reduce power consumption, to improve communication efficiency.

It should be noted that, after determining the transmission cycle, the communication apparatus may receive and send data in the transmission cycle for one or more times. An execution policy of receiving and sending data in the transmission cycle by the communication apparatus is not limited in this application. The execution policy includes a number of times of repeatedly receiving and sending data in the transmission cycle, duration of repeatedly receiving and sending data in the transmission cycle, and the like. For example, the communication apparatus may determine, based on a preconfigured execution policy, the execution policy of receiving and sending data in the transmission cycle. For another example, the communication apparatus may determine, based on an instruction entered by a user, the execution policy of receiving and sending data in the transmission cycle.

In a possible implementation of the first aspect, the first data includes m codewords, the second data includes n codewords, and both m and n are integers greater than or equal to 1.

Based on the foregoing technical solution, a payload (payload) included in the first data sent by the communication apparatus in the transmission cycle may be the m codewords obtained through encoding processing, to improve data processing efficiency. Similarly, a payload (payload) included in the second data received by the communication apparatus in the transmission cycle may be the n codewords obtained through encoding processing, to improve the data processing efficiency.

It should be understood that, during actual application, the payload included in the first data may alternatively be data that does not need to be encoded. Similarly, the payload included in the second data may alternatively be data that does not need to be encoded.

In a possible implementation of the first aspect, the first data further includes a first data header, and the second data further includes a second data header, where a time domain length corresponding to the first data header is equal to a time domain length corresponding to the second data header.

Based on the foregoing technical solution, the first data sent by the communication apparatus further includes the first data header, and correspondingly the second data received by the communication apparatus further includes the second data header. The time domain length corresponding to the first data header is equal to the time domain length corresponding to the second data header. The data header may carry management information, overhead information, and the like. In this case, in a process of receiving and sending data in the transmission cycle, different communication apparatuses determine that a time domain length corresponding to a data header of received data is equal to a time domain length corresponding to a data header of sent data, to reduce implementation complexity.

It should be understood that, in this implementation, the time domain length corresponding to the first data header being equal to the time domain length corresponding to the second data header is a possible implementation. During actual application, the time domain length corresponding to the first data header may alternatively be not equal to the time domain length corresponding to the second data header, so that a time domain length of receiving and sending data by the communication apparatus is flexibly configured.

In a possible implementation of the first aspect, the transmission cycle further includes a third time domain location between the first time domain location and the second time domain location, and a time domain length corresponding to the third time domain location is equal to the time domain length corresponding to the first data header.

Based on the foregoing technical solution, the transmission cycle further includes the third time domain location between the first time domain location and the second time domain location. To be specific, a transmission gap (gap) of the third time domain location is set, so that the time domain location carrying sent data is further isolated from the time domain location carrying received data, and mutual impact between the sent data and the received data is further reduced. In addition, the time domain length corresponding to the third time domain location is equal to the time domain length corresponding to the first data header, so that in a process of receiving and sending data in the transmission cycle, different communication apparatuses determine that a time domain length corresponding to a data header of received and sent data is equal to the time domain length corresponding to the third time domain location, to reduce the implementation complexity.

Optionally, the communication apparatus does not send data at the third time domain location.

It should be understood that, in this implementation, the time domain length corresponding to the third time domain location may be equal to the time domain length corresponding to the first data header is a possible implementation. During actual application, the time domain length corresponding to the third time domain location may alternatively be not equal to the time domain length corresponding to the first data header. For example, the time domain length corresponding to the third time domain location is greater than the time domain length corresponding to the first data header, and in a manner in which a time domain gap between receiving and sending data is increased, further isolation is implemented between the time domain location carrying the sent data and the time domain location carrying the received data. For another example, the time domain length corresponding to the third time domain location is less than the time domain length corresponding to the first data header, and in a manner in which a time domain gap between receiving and sending data is reduced, the time domain length of the receiving and sending data can be increased when a time domain length of the transmission cycle is fixed.

In a possible implementation of the first aspect, the transmission cycle further includes a fourth time domain location, where a start moment of the fourth time domain location is the same as a start moment of the transmission cycle, or an end moment of the fourth time domain location is the same as an end moment of the transmission cycle. A time domain length corresponding to the fourth time domain location is equal to the time domain length corresponding to the first data header.

Optionally, the communication apparatus does not send data at the fourth time domain location.

Based on the foregoing technical solution, a time domain start location of the transmission cycle or a time domain end location of the transmission cycle further includes the fourth time domain location. To be specific, a transmission gap (gap) of the fourth time domain location is set, so that isolation between time domain locations of adjacent transmission cycles is implemented, and mutual impact between data received and sent by the communication apparatus in the adjacent transmission cycles is reduced. In addition, the time domain length corresponding to the fourth time domain location is equal to the time domain length corresponding to the first data header, so that in a process of receiving and sending data in different transmission cycles, the communication apparatus determines that the time domain length corresponding to the first data header is equal to the time domain length corresponding to the fourth time domain location, to reduce the implementation complexity.

It should be understood that, in this implementation, the time domain length corresponding to the fourth time domain location may be equal to the time domain length corresponding to the first data header is a possible implementation. During actual application, the time domain length corresponding to the fourth time domain location may alternatively be not equal to the time domain length corresponding to the first data header, so that the time domain length corresponding to the fourth time domain location and the time domain length corresponding to the first data header are flexibly configured.

In a possible implementation of the first aspect, an amount of data carried by the first data header is k times a codeword length, k is less than or equal to 0.5, and k is greater than or equal to 0.25.

Optionally, k may alternatively be another value. For example, k is less than or equal to 1, k is less than or equal to 0.25, or k is another value. This is not limited herein.

Optionally, "codeword length" refers to a codeword length of each of the m codewords, or "codeword length" is a codeword length of each of the n codewords.

In a possible implementation of the first aspect, the first data further includes the first data header, and the second data further includes the second data header, and the amount of the data carried by the first data header is equal to an amount of data carried by the second data header.

Based on the foregoing technical solution, the first data sent by the communication apparatus further includes the first data header, and correspondingly, the second data received by the communication apparatus further includes the second data header. The time domain length corresponding to the first data header is equal to the time domain length corresponding to the second data header. The data header may carry the management information, the overhead information, and the like. In this case, in a process of receiving and sending data in the transmission cycle, different communication apparatuses determine that an amount of data carried by a data header of received data is equal to an amount of data carried by a data header of sent data, to reduce the implementation complexity.

In a possible implementation of the first aspect,
in the first data, the m codewords are data obtained through scrambling, and the first data header is data obtained without scrambling; and/or
in the second data, the n codewords are data obtained through scrambling, and the second data header is data obtained without scrambling.

Based on the foregoing technical solution, in the first data sent by the communication apparatus, the communication apparatus may scramble to-be-sent payload (payload) information, to obtain the m codewords, so as to improve direct current balance of the sent data of the communication apparatus. In addition, the communication apparatus may not need to scramble the first data header that carries the management information, the overhead information, and the like, so that a receiver of the sent data quickly parses the m codewords based on the first data header. Similarly, in the second data received by the communication apparatus, a sender of the second data may scramble to-be-sent payload (payload) information, to obtain the n codewords, so as to improve direct current balance of the data. In addition, the sender of the second data may not need to scramble the second data header that carries the management information, the overhead information, and the like, so that the communication apparatus quickly parses the n codewords based on the second data header.

Optionally, in the first data, the first data header is data obtained through scrambling. Similarly, in the second data, the second data header is data obtained through scrambling. In this way, the communication apparatus performs scrambling processing on all to-be-sent data without distinguishing processing, to reduce complexity.

In a possible implementation of the first aspect, the communication apparatus is a slave node, and that communication apparatus determines a transmission cycle includes: The communication apparatus receives configuration information from a master node, where the configuration information is for determining a value of m and/or a value of n. The communication apparatus determines the transmission cycle based on the configuration information.

Based on the foregoing technical solution, the communication method may be applied to a process of bidirectional communication between different communication apparatuses having a master-slave relationship. When a communication apparatus is the slave node, the communication apparatus may determine the value of m and/or the value of n based on configuration information of the master node, and further determine the transmission cycle based on the value of m and/or the value of n.

Optionally, when the configuration information is for determining the value of m, the value of n may be preconfigured in the communication apparatus. Similarly, when the configuration information is for determining the value of n, the value of m may be preconfigured in the communication apparatus.

In a possible implementation of the first aspect, the configuration information further includes: the time domain length corresponding to the third time domain location and/or the time domain length corresponding to the fourth time domain location.

Based on the foregoing technical solution, when the transmission cycle further includes the third time domain location and the fourth time domain location, the configuration information sent by the master node to the slave node may further include the time domain length corresponding to the third time domain location and/or the time domain length corresponding to the fourth time domain location, so that the slave node determines a time domain configuration of a transmission gap in the transmission cycle.

Optionally, the time domain length corresponding to the third time domain location and/or the time domain length corresponding to the fourth time domain location may alternatively be preconfigured in the communication apparatus, so that the communication apparatus can determine a time domain configuration of a transmission gap in the transmission cycle without configuration of the master node, thereby reducing overheads.

In a possible implementation of the first aspect, the communication apparatus is a master node, and that the communication apparatus determines a transmission cycle includes: The communication apparatus determines the transmission cycle based on port rate information of the communication apparatus.

Based on the foregoing technical solution, the communication method may be applied to a process of bidirectional communication between different communication apparatuses having a master-slave relationship. When a communication apparatus is the master node, the communication apparatus can determine the transmission cycle based on the port rate information of the communication apparatus. In a process in which the communication apparatus performs bidirectional communication with other communication apparatuses, because port rates of the other communication apparatuses are not necessarily the same, the communication apparatus can determine a related configuration of the transmission cycle in a preset mapping relationship based on port rate information of the other communication apparatuses.

Optionally, the preset mapping relationship may include a mapping relationship between the port rate information and the related configuration (for example, at least one of the value of m, the value of n, the time domain length corresponding to the third time domain location, and the time domain length corresponding to the fourth time domain location) of the transmission cycle, and the preset mapping relationship may be implemented in a table, a text, a chart, or another manner. This is not limited herein.

Optionally, when the communication apparatus is the master node, if the communication apparatus supports transmission of only one port rate, the related configuration of the transmission cycle may be written to the communication apparatus in a pre-configuration manner, so that the communication apparatus does not need to determine the transmission cycle based on the port rate information of the communication apparatus.

Optionally, when the communication apparatus is the master node, the communication apparatus may alternatively determine the related configuration of the transmission cycle based on an instruction entered by a user, so that the communication apparatus can also support personalized configuration of the user without determining the transmission cycle based on the port rate information of the communication apparatus.

In a possible implementation of the first aspect, the communication apparatus determines the related configuration of the transmission cycle in the pre-configuration manner, in a manner of the instruction entered by the user, or in a manner of negotiation between different communication apparatuses. In other words, the communication method may be applied to a process of bidirectional communication between different communication apparatuses that do not have a master-slave relationship, to adapt to different application scenarios.

In a possible implementation of the first aspect, m is not equal to n.

Based on the foregoing technical solution, a number m of codewords included in the first data sent by the communication apparatus is not equal to a number n of codewords included in the second data received by the communication apparatus, so that the communication method supports a bidirectional communication scenario in which uplink and downlink transmission rates are inconsistent (namely, asymmetric). For example, when a data amount of the sent data of the communication apparatus is greater than a data amount of the received data, m is greater than n. For another example, when the data amount of the received data of the communication apparatus is greater than the data amount of the sent data, n is greater than m.

Optionally, m is equal to n, to be specific, the number m of codewords included in the first data sent by the communication apparatus is equal to the number n of codewords included in the second data received by the communication apparatus, so that the communication method supports a bidirectional communication scenario in which uplink and downlink transmission rates are consistent (namely, symmetric).

In a possible implementation of the first aspect, both the m codewords and the n codewords are codewords obtained based on a forward error correction (forward error correction, FEC) code.

Optionally, the m codewords or the n codewords may alternatively be codewords obtained through a concatenated code, cross coding, or in another manner. This is not limited herein.

In a possible implementation of the first aspect, that the communication apparatus sends first data at the first time domain location of the transmission cycle includes: The communication apparatus obtains a first media access control (media access control, MAC) frame at the first time domain location of the transmission cycle. The communication apparatus sends the first data based on the MAC frame.

Based on the foregoing technical solution, the first data sent by the communication apparatus at the first time domain location of the transmission cycle is generated based on the MAC frame, so that the communication method can be applied to Ethernet, and a feature of backward compatibility of a frame format and a protocol of a MAC layer in the Ethernet is inherited. In other words, frame formats and protocols (same or similar) of MAC layers in different Ethernet protocols may be compatible with each other, to inherit an Ethernet ecosystem.

In a possible implementation of the first aspect, the communication apparatus includes a MAC layer entity, a physical medium attachment PMA layer entity, and a control module, and that the communication apparatus obtains a MAC frame at the first time domain location of the transmission cycle includes: At a start moment of the first time domain location of the transmission cycle, the control module sends, to the MAC layer entity, indication information indicating the MAC layer entity to send data, and the control module sends, to the PMA layer entity, indication information indicating the PMA layer entity to send data. After the start moment of the first time domain location of the transmission cycle and before an end moment of the first time domain location of the transmission cycle, the control module receives the MAC frame from the MAC layer entity (where a number of MAC frames herein may be an integer, for example, one or more, or may be a non-integer, for example, 0.4, 2.3, or 2.4, which is not limited herein). At the end moment of the first time domain location of the transmission cycle, the control module sends, to the MAC layer entity, indication information indicating the MAC layer entity to stop sending data, and the control module sends, to the PMA layer entity, indication information indicating the PMA layer entity to stop sending data.

Based on the foregoing technical solution, the communication apparatus may further include the control module. The control module may separately indicate, at different moments corresponding to the first time domain location of the transmission cycle, a MAC layer and a PMA layer to send or stop sending, so that the communication apparatus sends the first data at the first time domain location based on the obtained MAC frame, and the communication apparatus stops obtaining the MAC frame at a time domain location other than the first time domain location, to avoid a problem of service flow aggregation.

In a possible implementation of the first aspect, the communication apparatus includes the physical medium attachment (physical medium attachment, PMA) layer entity and the control module, and that the communication apparatus receives second data at the second time domain location of the transmission cycle includes: At a start moment of the second time domain location of the transmission cycle, the control module sends, to the PMA layer entity, indication information indicating to receive data. After the start moment of the second time domain location of the transmission cycle and before an end moment of the second time domain location of the transmission cycle, the PMA layer entity receives the second data. At the end moment of the second time domain location of the transmission cycle, the control module sends, to the PMA layer entity, indication information indicating to stop receiving data.

Based on the foregoing technical solution, the communication apparatus may further include the control module. The control module may separately indicate, at different moments corresponding to the second time domain location of the transmission cycle, the PMA layer to receive or stop receiving data, so that the communication apparatus receives data at the second time domain location, and the communication apparatus stops receiving data at a time domain location other than the second time domain location, to avoid the problem of the service flow aggregation.

In a possible implementation of the first aspect, the control module is located in a physical layer device (PHYSICAL LAYER DEVICE, referred to as a PHY for short) of the communication apparatus.

Optionally, the control module may be located at a reconciliation sublayer (reconciliation sublayer, RS), a physical coding sublayer (physical coding sublayer, PCS), a PMA, a physical medium dependent layer (physical medium dependent, PMD), or another sublayer in the PHY. Alternatively, the control module may be located at a newly added independent sublayer different from the RS, the PCS, the PMA, the PMD, or the another sublayer in the PHY This is not limited herein.

In a possible implementation of the first aspect, the first data header includes first indication information, and the first indication information indicates the value of m; and/or the second data header includes second indication information, and the second indication information indicates the value of n.

Based on the foregoing technical solution, the first data header of the first data sent by the communication apparatus may include the first indication information indicating the value of m, so that a receiver of the first data can parse the m codewords based on the first indication information. Similarly, the second data header of the second data received by the communication apparatus may include second indication information indicating the value of n, so that the communication apparatus can parse the n codewords based on the second indication information.

In a possible implementation of the first aspect,
the first data header includes at least one of the following:
third indication information, where the third indication information indicates an adjustment request of an expected number of codewords;
fourth indication information, where the fourth indication information indicates an adjustment acknowledgment of accepting or rejecting an expected number of codewords; or
fifth indication information, where the fifth indication information indicates an adjustment commit of an expected number of codewords, and a value of a number of codewords that the communication apparatus expects to send is m; and/or
the second data header includes at least one of the following:
   sixth indication information, where the sixth indication information indicates an adjustment request of an expected number of codewords;
   seventh indication information, where the seventh indication information indicates an adjustment acknowledgment of accepting or rejecting an expected number of codewords; or
   eighth indication information, where the eighth indication information indicates an adjustment commit of an expected number of codewords, and a value of a number of codewords that the second node expects to send is n.

Based on the foregoing technical solution, the first data header of the first data sent by the communication apparatus or the second data header of the second data received by the communication apparatus may further negotiate to adjust the value of m or the value of n based on a length adjustment mechanism of a length adjustment request (length adjustment request, LAR), a length adjustment acknowledgment (length adjustment acknowledgment, LAA), and a length adjustment commit (length adjustment commit, LAC), to implement flexible adjustment of a receiving and sending rate of data.

A second aspect of this application provides a communication apparatus, and the apparatus can implement the method in any one of the first aspect or the possible implementations of the first aspect. The apparatus includes a corresponding unit or module configured to perform the method. The unit or module included in the apparatus may be implemented by software and/or hardware. For example, the apparatus may be a communication apparatus, the apparatus may be a component (for example, a processor, a chip, or a chip system) in a communication apparatus, or the apparatus may be a logical module or software that can implement all or a part of functions of a communication apparatus. In the second aspect and possible implementations of the second aspect, an example in which the communication method is performed by a communication apparatus is used for description. The communication apparatus may be a device such as a router, a switch, a virtual machine, a home gateway device, an OLT device, or a terminal entity (such as a camera, a sensor, or a server).

The apparatus includes a processing unit and a transceiver unit.

The processing unit is configured to determine a transmission cycle. The transmission cycle includes a first time domain location and a second time domain location that do not overlap each other in time domain, the first time domain location is for carrying data sent by the communication apparatus, and the second time domain location is for carrying data received by the communication apparatus.

The transceiver unit is configured to send first data at the first time domain location of the transmission cycle, and the transceiver unit is further configured to receive second data at the second time domain location of the transmission cycle.

In a possible implementation of the second aspect, the first data includes m codewords, the second data includes n codewords, and both m and n are integers greater than or equal to 1.

In a possible implementation of the second aspect,
the first data further includes a first data header, and the second data further includes a second data header.

A time domain length corresponding to the first data header is equal to a time domain length corresponding to the second data header.

In a possible implementation of the second aspect,
the transmission cycle further includes a third time domain location between the first time domain location and the second time domain location, and a time domain length corresponding to the third time domain location is equal to the time domain length corresponding to the first data header.

In a possible implementation of the second aspect,
the transmission cycle further includes a fourth time domain location, where a start moment of the fourth time domain location is the same as a start moment of the transmission cycle, or an end moment of the fourth time domain location is the same as an end moment of the transmission cycle.

A time domain length corresponding to the fourth time domain location is equal to the time domain length corresponding to the first data header.

In a possible implementation of the second aspect,
an amount of data carried by the first data header is k times a codeword length, k is less than or equal to 0.5, and k is greater than or equal to 0.25.

In a possible implementation of the second aspect, the first data further includes the first data header, and the second data further includes the second data header.

The amount of the data carried by the first data header is equal to an amount of data carried by the second data header.

In a possible implementation of the second aspect,
in the first data, the m codewords are data obtained through scrambling, and the first data header is data obtained without scrambling; and/or
in the second data, the n codewords are data obtained through scrambling, and the second data header is data obtained without scrambling.

In a possible implementation of the second aspect, the communication apparatus is a slave node.

The transceiver unit is further configured to receive configuration information from a master node, where the configuration information is for determining a value of m and/or a value of n.

The processing unit is configured to determine the transmission cycle based on the configuration information.

In a possible implementation of the second aspect, the configuration information further includes:
the time domain length corresponding to the third time domain location, and/or the time domain length corresponding to the fourth time domain location.

In a possible implementation of the second aspect, the communication apparatus is a master node.

The processing unit is specifically configured to determine the transmission cycle based on port rate information of the communication apparatus.

In a possible implementation of the second aspect,
m is not equal to n.

In a possible implementation of the second aspect,
both the m codewords and the n codewords are codewords obtained based on FEC.

In a possible implementation of the second aspect, the transceiver unit is specifically configured to:
obtain a MAC frame at the first time domain location of the transmission cycle, and
send the first data based on the MAC frame.

In a possible implementation of the second aspect, the communication apparatus further includes a MAC layer entity and a physical medium attachment PMA layer entity, the transceiver unit includes a control module, and that the transceiver unit obtains the MAC frame at the first time domain location of the transmission cycle includes the following.

At a start moment of the first time domain location of the transmission cycle, the control module sends, to the MAC layer entity, indication information indicating the MAC layer entity to send data, and the control module sends, to the PMA layer entity, indication information indicating the PMA layer entity to send data.

After the start moment of the first time domain location of the transmission cycle and before an end moment of the first time domain location of the transmission cycle, the control module receives the MAC frame from the MAC layer entity.

At the end moment of the first time domain location of the transmission cycle, the control module sends, to the MAC layer entity, indication information indicating the MAC layer entity to stop sending data, and the control module sends, to the PMA layer entity, indication information indicating the PMA layer entity to stop sending data.

In a possible implementation of the second aspect, the communication apparatus further includes the PMA layer entity, the transceiver unit includes the control module, and that the communication apparatus receives the second data at the second time domain location of the transmission cycle includes the following.

At a start moment of the second time domain location of the transmission cycle, the control module sends, to the PMA layer entity, indication information indicating to receive data.

After the start moment of the second time domain location of the transmission cycle and before an end moment of the second time domain location of the transmission cycle, the PMA layer entity receives the second data.

At the end moment of the second time domain location of the transmission cycle, the control module sends, to the PMA layer entity, indication information indicating to stop receiving the data.

In a possible implementation of the second aspect, the transceiver unit is located at a physical layer device PHYSICAL LAYER DEVICE of the communication apparatus.

In a possible implementation of the second aspect,
the first data header includes first indication information, and the first indication information indicates the value of m; and/or
the second data header includes second indication information, and the second indication information indicates the value of n.

In a possible implementation of the second aspect,
the first data header includes at least one of the following:
third indication information, where the third indication information indicates an adjustment request of an expected number of codewords;
fourth indication information, where the fourth indication information indicates an adjustment acknowledgment of accepting or rejecting an expected number of codewords; or
fifth indication information, where the fifth indication information indicates an adjustment commit of an expected number of codewords, and a value of a number of codewords that the communication apparatus expects to send is m; and/or
the second data header includes at least one of the following:
   sixth indication information, where the sixth indication information indicates an adjustment request of an expected number of codewords;
   seventh indication information, where the seventh indication information indicates an adjustment acknowledgment of accepting or rejecting an expected number of codewords; or
   eighth indication information, where the eighth indication information indicates an adjustment commit of an expected number of codewords, and a value of a number of codewords that the second node expects to send is n.

In the second aspect of embodiments of this application, the compositional module of the communication apparatus may be further configured to perform the steps performed in the possible implementations of the first aspect. For details, refer to the first aspect. Details are not described herein.

A third aspect of embodiments of this application provides a communication apparatus, including at least one processor, where the at least one processor is coupled to a memory.

The memory is configured to store a program or instructions.

The at least one processor is configured to execute the program or the instructions, to cause the apparatus to implement the method in any one of the first aspect or the possible implementations of the first aspect.

A fourth aspect of embodiments of this application provides a computer-readable storage medium. The storage medium is configured to store one or more computer-executable instructions. When the computer-executable instructions are executed by a processor, the processor performs the method in any one of the first aspect or the possible implementations of the first aspect.

A fifth aspect of embodiments of this application provides a computer program product (which is also referred to as a computer program). When the computer program product is executed by a processor, the processor performs the method in any one of the first aspect or the possible implementations of the first aspect.

A sixth aspect of embodiments of this application provides a chip system. The chip system includes at least one processor, and is configured to support a first network device in implementing the function in any one of the first aspect or the possible implementations of the first aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A seventh aspect of embodiments of this application provides a communication system. The communication system includes the communication apparatus in the second aspect, and/or the communication system includes the communication apparatus in the third aspect.

For technical effects brought by any design manner of the second aspect to the seventh aspect, refer to the technical effects brought by different implementations of the first aspect. Details are not described herein again.

### BRIEF DESCRIPTION OF DRAWINGS

FIG. 1 is a diagram of a structure of a network protocol layer according to this application;
FIG. 2a is a diagram of a structure of an encoded code block according to this application;
FIG. 2b is a diagram of a structure of an encoded code block according to this application;
FIG. 3 is a diagram of a network structure of a vehicle-mounted network;
FIG. 4 is a diagram of data transmission in a vehicle-mounted network;
FIG. 5 is a diagram of an application scenario according to this application;
FIG. 6 is another diagram of an application scenario according to this application;
FIG. 7 is a diagram of a communication method according to this application;
FIG. 8 is another diagram of a communication method according to this application;
FIG. 9 is a diagram of a configuration manner of a port rate according to this application;
FIG. 10a is another diagram of a communication method according to this application;
FIG. 10b is another diagram of a communication method according to this application;
FIG. 11 is a diagram of a data encapsulation procedure according to this application;
FIG. 12 is another diagram of a communication method according to this application;
FIG. 13a is another diagram of a communication method according to this application;
FIG. 13b is another diagram of a communication method according to this application;
FIG. 14 is a diagram of a field structure in a communication method according to this application;
FIG. 15 is another diagram of a communication method according to this application;
FIG. 16 is a diagram of a communication apparatus according to this application; and
FIG. 17 is another diagram of a communication apparatus according to this application.

### DESCRIPTION OF EMBODIMENTS

The following describes the technical solutions in embodiments of this application with reference to the accompanying drawings in embodiments of this application. All other embodiments obtained by a person of ordinary skill in the art based on embodiments of this application without creative efforts shall fall within the protection scope of this application.

First, a part of terms in embodiments of this application are explained and described, to facilitate understanding of a person skilled in the art.
(1) Ethernet: The Ethernet (Ethernet) is a computer local area network technology that is currently widely used. Standards IEEE 802.1 and IEEE 802.3 define technical standards of the Ethernet.
(2) Forward error correction (forward error correction, FEC): The FEC is an error control manner, and refers to a technology that before a signal is sent to a transmission channel, the signal is encoded in advance based on a particular algorithm, a redundant code having a feature of the signal is added, at a receiving end, the received signal is decoded based on a corresponding algorithm, and an error code generated during transmission is found and corrected. Coding gain of the FEC is an indicator that measures an error correction capability of the FEC.
(3) Reed-Solomon (Reed-Solomon, referred to as RS for short) code: The RS code is a forward error correction code, and a parameter representation manner of the RS code is usually RS (n, k, t, m), RS (n, k, m), or RS (n, k). n represents a total length of the RS code, k represents a length of a payload (Payload) in the RS code, t represents an error correction capability of the RS code, the three parameters, namely, n, k, and t all use a symbol as a unit, and m represents a number of bits (bits) included in each symbol. An FEC policy implemented by using the RS code usually is also referred to as RS-FEC.

For example, in a vehicle-mounted network technology, common FEC codewords are FEC (544, 514), FEC (360, 326), FEC (936, 876), and the like.

(4) Terms "system" and "network" in embodiments of this application may be used interchangeably. "At least one" means one or more, and "a plurality of" means two or more than two. Aterm "and/or" describes an association relationship of associated objects, and indicates that three relationships may exist. For example, A and/or B may indicate the following three cases: Only A exists, both A and B exist, and only B exists, where A and B may be singular or plural. A character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are for distinguishing between a plurality of objects, and are not for limiting a sequence, a time sequence, priorities, or importance of the plurality of objects.

The Ethernet is a computer local area network technology that is currently widely used. Standards related to 802.1 and IEEE 802.3 standard ethernet defined by the IEEE are widely used in the industry. In 1980, the IEEE formulated the standard 802.3, indicating the birth of the Ethernet. Since the emergence of the Ethernet, a packet forwarding manner, namely, a forwarding manner of destination forwarding (destination forwarding), has been used. The manner naturally supports statistical multiplexing of a link bandwidth. In addition, an Ethernet device has a high deployment rate contributing to a low price and support of features such as plug-and-play. A carrier, a device vendor, an instrument vendor, a component vendor, a chip vendor, and the like all support development of the Ethernet technology. After decades of development, the Ethernet has almost the largest ecosystem and a mature industry chain. In addition, a maximum transmission unit (maximum transmission unit, MTU) of an Ethernet standard is defined due to problems such as fairness, a memory capacity, and hardware costs of a half-duplex shared medium of a current Ethernet physical link.

Optionally, a magnitude of an MTU value is 1500 bytes.

The Ethernet rate has progressed from the initial 10M half duplex communication to the current use of 200G, 400G, and future high bandwidth rates such as 800G, 1.6T, and the like. To provide backward compatibility, an architecture of the Ethernet basically evolves without affecting previous-generation technologies.

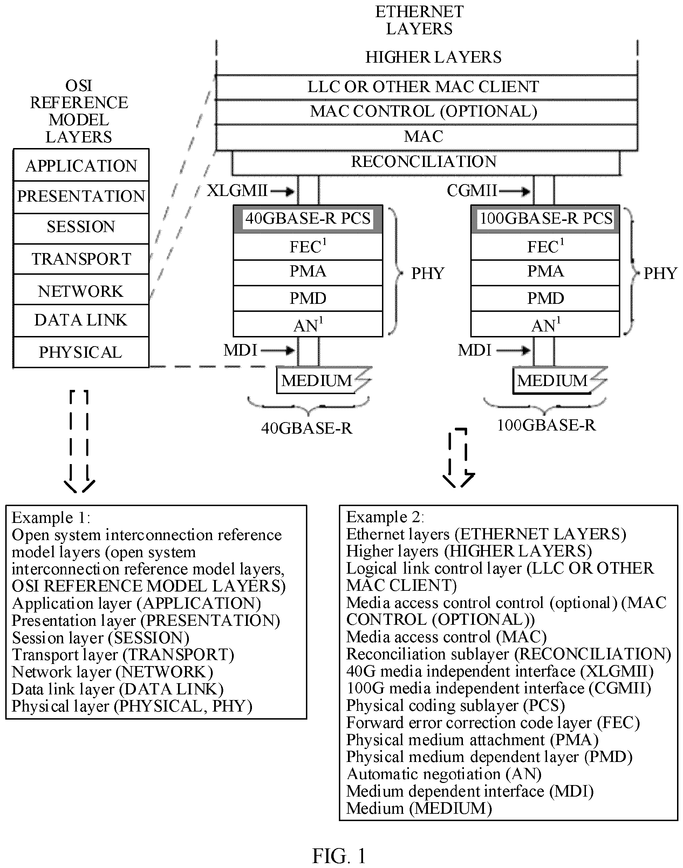

FIG. 1 is a diagram of a structure that is compatible with 40GBASE-R and 100GBASE-R Ethernet interfaces.

As shown in example 1 on the left side of FIG. 1, a network hierarchy structure of open system interconnection reference model layers (open system interconnection reference model layers, OSI REFERENCE MODEL LAYERS) includes an application layer (APPLICATION), a presentation layer (PRESENTATION), a session layer (SESSION), a transport layer (TRANSPORT), a network layer (NETWORK), a data link layer (DATA LINK), and a physical layer (PHYSICAL, PHY).

As shown in example 2 on the right side of FIG. 1, a network hierarchy structure of Ethernet layers (ETHERNET LAYERS) includes higher layers (HIGHER LAYERS), a logical link control layer (LLC OR OTHER MAC CLIENT), a media access control control (optional) (MAC CONTROL (OPTIONAL)), media access control (MAC), a reconciliation sublayer (RECONCILIATION, marked as an RS), a 40G media independent interface (XLGMII), a 100G media independent interface (CGMII), a physical coding sublayer (PCS), and a forward error correction code layer (FEC), physical medium attachment (PMA), a physical medium dependent layer (PMD), automatic negotiation (AN), a medium dependent interface (MDI), and a medium (MEDIUM). As shown in FIG. 1, the 40G media independent interface (or the 100G media independent interface), the physical coding sublayer, the forward error correction code layer, the physical medium attachment, the physical medium dependent layer, and the automatic negotiation may be referred to as a physical layer device (PHYSICAL LAYER DEVICE, referred to as PHY for short).

Optionally, the logical link control layer, the media access control control layer (optional), and the media access control layer at the Ethernet layers correspond to the data link layer at the open system interconnection reference model layers.

Similarly, the reconciliation sublayer, the 40G media independent interface, the 100G media independent interface, the physical coding sublayer, the forward error correction code layer, the physical medium attachment, the physical medium dependent layer, the automatic negotiation, and the medium dependent interface at the Ethernet layers correspond to the physical layer at the open system interconnection reference model layers.

For example, when an Ethernet interface is designed, it is considered that one MAC data stream is carried on Ethernet PHY For example, in a sending direction, the MAC data stream is transmitted through an interface, is sequentially processed by the MAC, the RS, the PCS, the FEC, the PMA, and the PMD from top to bottom, and is finally reflected as a signal sent to the AN. Similarly, in a receiving direction, a reverse process is involved. The signal is received from the AN, and is sequentially processed by the PMD, the PMA, the FEC, and the PCS, to restore the MAC data stream. It is generally considered that the physical layer at the Ethernet layers may change, and a frame format and a protocol of a MAC layer are backward compatible. In other words, in an Ethernet protocol of a new version, a frame format and a protocol of the MAC layer are compatible with those of an earlier version (same or similar).

In addition, the forward error correction code layer (FEC) of the Ethernet involves conversion of an encoding format, where the encoding format is generally marked as an M/N bit (bit) block. M represents an encoding input, and N represents an encoding output. Generally, M<N.

In an implementation example, in a 64B/66B coding block defined in IEEE 802.3, a 2-bit synchronization header is added based on a 64-bit input and depending on whether the 64-bit input is control information or service data information. 0b10 represents a control code block, and 0b01 represents a data code block. Another type of synchronization header represents an invalid code block.

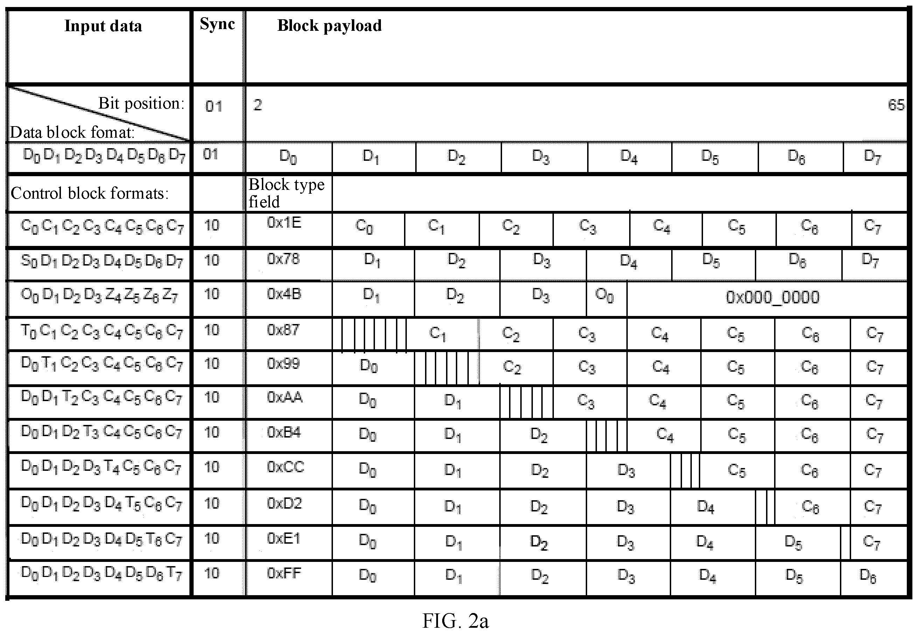

FIG. 2a shows an example of a diagram of a structure of a code block in a 64B/66B coding format defined in a standard.

As shown in FIG. 2a, a synchronization header area of the code block includes the zero^{th} bit and the first bit of the code block. The synchronization header area of the code block has two cases: 01 and 10. A code block whose synchronization header is 01 is referred to as a data code block, and the data code block may be written as a D code block. A code block whose synchronization header is 10 is referred to as a control code block. Afield D0 of the control code block occupies eight bits, and may be referred to as a type field (where the type field may be written as a type field) of the control code block.

The control code block may include a header code block, a tail code block, an ordered set code block (which may also be written as an O code block), an idle code block (where the idle code block may also be written as an IDLE code block), an error code block (where the error code block may also be written as an error code block), a low power consumption code block, and the like. For example, the header code block is a code block whose synchronization header is 10 and whose type field is 0x78 in FIG. 2a, the tail code block may include code blocks whose synchronization headers are 10 and whose type fields are 0x87, 0x99, 0xAA, 0xB4, 0xCC, 0xD2, 0xEl, and 0xFF in FIG. 2a, and the O code block is a code block whose synchronization header is 10 and whose type field is 0x4B in FIG. 2a.

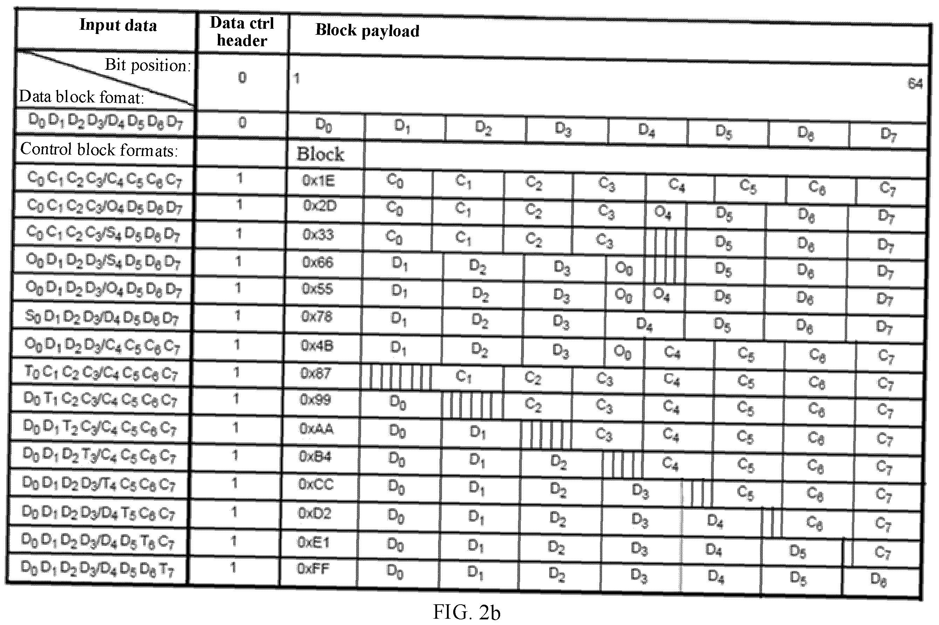

In another implementation example, as shown in FIG. 2b, a 64/65-bit block is a coding block formed by compressing the 2-bit synchronization header into a 1-bit synchronization header based on the 64B/66B coding block. The following figure shows two compressed 65-bit idle code block formats. A compression format is not limited in this specification. Alternatively, 64b is directly coded, and the 1-bit synchronization header is added to form the 65-bit block.

The following describes application of the Ethernet technology in a vehicle-mounted network.

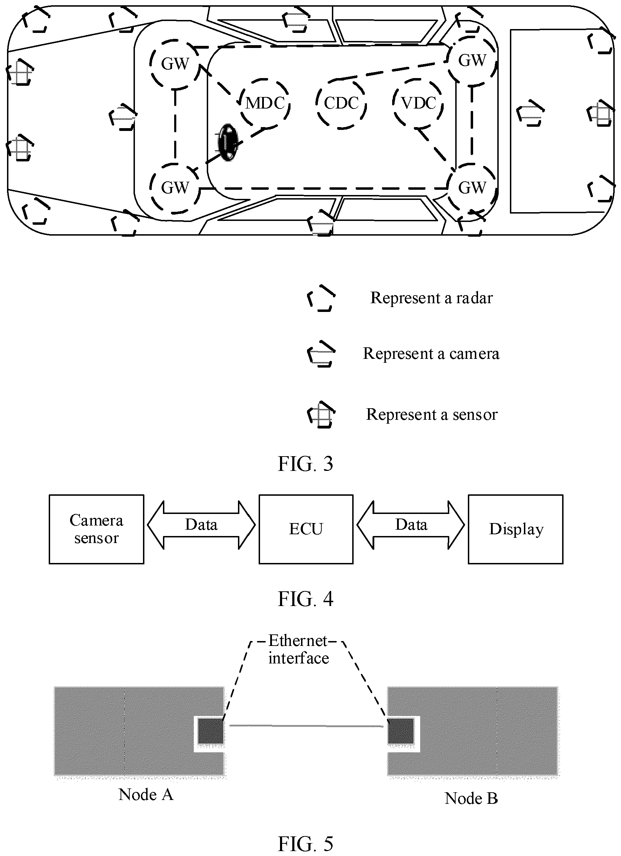

The vehicle-mounted network (in-vehicle network), which is fully mechanized at first, gradually evolves to a vehicle-mounted ring network through a bus network, a direct network, and a domain-based network domain architecture. As shown in FIG. 3, the vehicle-mounted ring network is a backbone network in a vehicle, and is connected to a plurality of gateway communication devices. Currently, the vehicle-mounted ring network, namely, the backbone network (for example, a network connected between devices such as a cockpit domain controller (cockpit domain controller, CDC), a mobile data center (mobile data center, MDC), a vehicle domain controller (vehicle domain controller, VDC), and a gateway device (gateway, GW) in FIG. 3) is mainly the Ethernet, for example, 5 gigabits per second (Gbps) and 10 Gbps, and may evolve to a higher bandwidth in the future. An access network of the ring network is mainly a network (where a connected line is not shown in the figure) connected between devices such as a camera, a sensor, and a radar shown in FIG. 3 and a device in the backbone network. With the continuous increase of a pixel and a frame rate, a bandwidth of an access link of the vehicle-mounted ring network also gradually increases from a K-level rate to an M-level rate and a G-level rate. Currently, there are many vehicle-mounted access technologies, such as the oldest series of technologies based on low-voltage differential signal (Low-Voltage Differential Signaling, LVDS) and serialize-deserialize (Serialize-Deserialize, SerDes). These technologies are not Ethernet technologies, and cannot be compatible with an Ethernet technology of a current ring network.

Currently, in a data transmission process based on the Ethernet technology, bidirectional transmission of data is supported. However, in a scenario of the bidirectional transmission, an echo cancellation (echo cancellation, EC) technology and a hybrid (hybrid) technology with isolation are generally depended on. For example, in a process of bidirectional communication between two nodes, after a data signal sent by a node A arrives at a node B, a reflection signal is generated due to collision between the data signal and a receiving component in the node B, affecting a data signal sent by the node B to the node A. In the EC technology, the reflection signal is eliminated based on an EC component, an algorithm, and the like. In addition, in the hybrid technology, in a process of bidirectional communication, isolation of sent data of a node from received data of the node is enabled based on a coupler with isolation. Therefore, based on the EC technology and the hybrid technology, mutual impact between the sent data and the received data can be reduced.

The mutual impact between the sent data and the received data is especially significant in an asymmetric bidirectional transmission scenario. The vehicle-mounted network is used as an example. As shown in FIG. 4, a signal sent by a camera (to be specific, the camera sensor in FIG. 4) to an electronic control unit (electronic control unit, ECU) is a video frame signal, and is transmitted in a high bandwidth. In a reverse direction, a signal sent by a processing unit to the camera is a small-traffic control signal, and is transmitted in a low bandwidth. The service presents a feature of asymmetry. Similarly, communication between the ECU and a display (to be specific, the display in FIG. 4) also has a similar feature of asymmetry. To be specific, a processor sends a video frame signal with a high bandwidth to the display, and in a reverse direction, when the display is controlled by a person, the display sends some interactive small-bandwidth control signals to the ECU. It can be learned from the example shown in FIG. 4 that uplink and downlink traffic of a vehicle-mounted camera sensor service is asymmetric, and a signal transmitted in a high bandwidth easily causes large impact on a signal transmitted in a low bandwidth. However, there is no corresponding technology in the current Ethernet to resolve the foregoing problem.

In conclusion, in an implementation process of the current Ethernet technology, in the process of the bidirectional communication implemented based on the EC technology and the hybrid technology, a new component needs to be added. As a result, device power consumption is excessively high, and communication efficiency is affected.

To resolve the foregoing problem, this application provides a communication method and a communication apparatus. Mutual impact between sent data and received data of the communication apparatus can be reduced without adding a new component. In comparison with a process of bidirectional communication implemented based on the EC technology and the hybrid technology, a process of bidirectional communication provided in the communication method can reduce costs and reduce power consumption, to improve communication efficiency.

The following first describes examples of application scenarios of the communication method provided in this application. The communication method may be applied to a point-to-point Ethernet communication scenario.

In an implementation example, FIG. 5 shows an example in which communication apparatuses to which the communication method is applied include a node A and a node B. The node A and the node B have Ethernet interfaces, and separately receive and send data through respective Ethernet interfaces, to perform the communication method in this application. For example, the node A and the node B may be a router, a switch, a virtual machine, a home gateway device, an OLT device, or a terminal entity (for example, a camera, a sensor, a personal computer, or a server) integrated with the Ethernet interface.

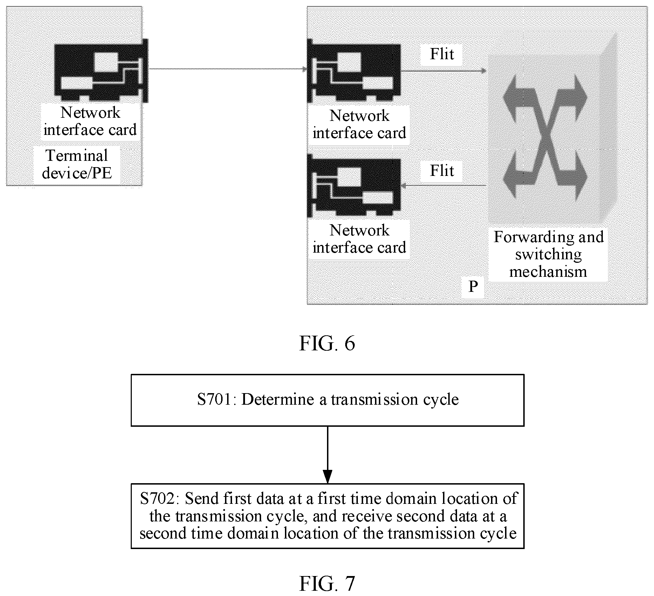

In another implementation example, FIG. 6 shows an example in which the communication apparatuses to which the communication method is applied include a terminal device (for example, a provider edge (provider edge, PE) device in the figure) and a network device (for example, a provider (provider, P) device in the figure). The PE and P may be specifically a router or a switch that includes a network interface card (for example, a PHY chip) and that supports a packet forwarding function.

It should be understood that the scenarios shown in FIG. 5 and FIG. 6 are merely examples for description. During actual application, the communication method provided in this application may be applied to a communication process between any devices that support Ethernet communication. An application scenario of the communication method is not limited in this application. In addition, the communication method provided in this application is performed by a communication apparatus, the communication method provided in this application is performed by some components (such as a processor, a chip, or a chip system) in a communication apparatus, or the communication method provided in this application is implemented by a logical module or software that can implement all or a part of functions of a communication apparatus. In the following implementation, an example in which the communication method is performed by a communication apparatus is used for description. The communication apparatus may be a device such as a router, a switch, a virtual machine, a home gateway device, an optical line terminal (optical line terminal, OLT) device, or a terminal entity (such as a camera, a sensor, or a server).

FIG. 7 is a diagram of a communication method according to this application. The method includes the following steps.

S701: Determine a transmission cycle.

In this embodiment, a communication apparatus determines the transmission cycle in step S701. The transmission cycle includes a first time domain location and a second time domain location that do not overlap each other in time domain. The first time domain location is for carrying data sent by the communication apparatus, and the second time domain location is for carrying data received by the communication apparatus.

It should be understood that the communication method provided in this application is applied to point-to-point communication, the first time domain location is specifically for carrying data sent by the communication apparatus to another communication apparatus, and the second time domain location is specifically for carrying data received by the communication apparatus from the another communication apparatus. The communication apparatus usually has one or more communication ports, and communication links may be separately established on different communication ports. The received and sent data of the communication apparatus mentioned below in this application specifically refers to received and sent data on a communication link between the communication apparatus and the another communication apparatus. For example, that the communication apparatus sends data mentioned below means that the communication apparatus sends data to the another communication apparatus. For another example, that the communication apparatus receives data mentioned below means that the communication apparatus receives data from the another communication apparatus. For another example, that the communication apparatus does not send data mentioned below means that the communication apparatus does not send data to the another communication apparatus. For another example, that the communication apparatus does not receive data mentioned below means that the communication apparatus does not receive data from the another communication apparatus.

S702: Send first data at the first time domain location of the transmission cycle, and receive second data at the second time domain location of the transmission cycle.

In this embodiment, after the communication apparatus determines the transmission cycle in step S701, in step S702, the communication apparatus sends the first data at the first time domain location of the transmission cycle, and the communication apparatus receives the second data at the second time domain location of the transmission cycle.

Optionally, in step S702, the first data includes m codewords, the m codewords include m codewords, the second data includes n codewords, the n codewords include n codewords, and both m and n are integers greater than or equal to 1.

Specifically, in an implementation process of step S702, a payload (payload) included in the first data sent by the communication apparatus in the transmission cycle may be the m codewords obtained through encoding processing, to improve data processing efficiency. Similarly, a payload (payload) included in the second data received by the communication apparatus in the transmission cycle may be the n codewords obtained through encoding processing, to improve the data processing efficiency.

It should be understood that, during actual application, the payload included in the first data may alternatively be data that does not need to be encoded. Similarly, the payload included in the second data may alternatively be data that does not need to be encoded.

In a possible implementation, m is not equal to n. Specifically, a number m of codewords included in the first data sent by the communication apparatus is not equal to a number n of codewords included in the second data received by the communication apparatus, so that the communication method supports a bidirectional communication scenario in which uplink and downlink transmission rates are inconsistent (namely, asymmetric). For example, when a data amount of the sent data of the communication apparatus is greater than a data amount of the received data, m is greater than n. For another example, when the data amount of the received data of the communication apparatus is greater than the data amount of the sent data, n is greater than m.

Optionally, m is equal to n, to be specific, the number m of codewords included in the first data sent by the communication apparatus is equal to the number n of codewords included in the second data received by the communication apparatus, so that the communication method supports a bidirectional communication scenario in which uplink and downlink transmission rates are consistent (namely, symmetric).

In addition, both the m codewords and the n codewords are codewords obtained based on a forward error correction code (forward error correction, FEC). Optionally, the m codewords or the n codewords may alternatively be codewords obtained through a concatenated code, cross coding, or in another manner. This is not limited herein. For ease of description, an example in which both the m codewords and the n codewords are the codewords obtained based on FEC is used for description below.

In a possible implementation, the first data further includes a first data header, and the second data further includes a second data header, where a time domain length corresponding to the first data header is equal to a time domain length corresponding to the second data header. Specifically, the first data sent by the communication apparatus in step S702 further includes the first data header, and correspondingly the second data received by the communication apparatus in step S702 further includes the second data header. The time domain length corresponding to the first data header is equal to the time domain length corresponding to the second data header. The data header may carry management information, overhead information, and the like. In this case, in a process of receiving and sending data in the transmission cycle, different communication apparatuses determine that a time domain length corresponding to a data header of received data is equal to a time domain length corresponding to a data header of sent data, to reduce implementation complexity.

It should be understood that, in this implementation, the time domain length corresponding to the first data header being equal to the time domain length corresponding to the second data header is a possible implementation. During actual application, the time domain length corresponding to the first data header may alternatively be not equal to the time domain length corresponding to the second data header, so that a time domain length of receiving and sending data by the communication apparatus is flexibly configured.

In a possible implementation, the first data further includes the first data header, and the second data further includes the second data header, and an amount of data carried by the first data header is equal to an amount of data carried by the second data header. Specifically, the first data sent by the communication apparatus in step S702 further includes the first data header, and correspondingly the second data received by the communication apparatus in step S702 further includes the second data header. The time domain length corresponding to the first data header is equal to the time domain length corresponding to the second data header. The data header may carry the management information, the overhead information, and the like. In this case, in a process of receiving and sending data in the transmission cycle, different communication apparatuses determine that an amount of data carried by a data header of received data is equal to an amount of data carried by a data header of sent data, to reduce the implementation complexity.

In addition, an amount of data carried by the first data header is k times a codeword length, k is less than or equal to 0.5, and k is greater than or equal to 0.25.

Optionally, k may alternatively be another value. For example, k is less than or equal to 1, k is less than or equal to 0.25, or k is another value. This is not limited herein.

Optionally, "codeword length" refers to a codeword length of each of the m codewords, or "codeword length" is a codeword length of each of the n codewords.

In a possible implementation, the transmission cycle determined by the communication apparatus in step S701 further includes a third time domain location between the first time domain location and the second time domain location, and a time domain length corresponding to the third time domain location is equal to the time domain length corresponding to the first data header.

Specifically, the transmission cycle further includes the third time domain location between the first time domain location and the second time domain location. To be specific, a transmission gap (gap) of the third time domain location is set, so that the time domain location carrying sent data is further isolated from the time domain location carrying received data, and mutual impact between the sent data and the received data in step S702 is further reduced. In addition, the time domain length corresponding to the third time domain location is equal to the time domain length corresponding to the first data header, so that in a process of receiving and sending data in the transmission cycle, different communication apparatuses determine that a time domain length corresponding to a data header of received and sent data is equal to the time domain length corresponding to the third time domain location, to reduce the implementation complexity.

Optionally, in the process of receiving and sending data in step S702, the communication apparatus does not send data at the third time domain location.

It should be understood that, in this implementation, the time domain length corresponding to the third time domain location may be equal to the time domain length corresponding to the first data header is a possible implementation. During actual application, the time domain length corresponding to the third time domain location may alternatively be not equal to the time domain length corresponding to the first data header. For example, the time domain length corresponding to the third time domain location is greater than the time domain length corresponding to the first data header, and in a manner in which a time domain gap between receiving and sending data is increased, further isolation is implemented between the time domain location carrying the sent data and the time domain location carrying the received data. For another example, the time domain length corresponding to the third time domain location is less than the time domain length corresponding to the first data header, and in a manner in which a time domain gap between receiving and sending data is reduced, the time domain length of the receiving and sending data can be increased when a time domain length of the transmission cycle is fixed.

In a possible implementation, the transmission cycle determined by the communication apparatus in step S701 further includes a fourth time domain location, where a start moment of the fourth time domain location is the same as a start moment of the transmission cycle, or an end moment of the fourth time domain location is the same as an end moment of the transmission cycle. A time domain length corresponding to the fourth time domain location is equal to the time domain length corresponding to the first data header.

Optionally, the communication apparatus does not send data at the fourth time domain location.

Specifically, a time domain start location of the transmission cycle or a time domain end location of the transmission cycle further includes the fourth time domain location. To be specific, a transmission gap (gap) of the fourth time domain location is set, so that isolation between time domain locations of adjacent transmission cycles is implemented, and mutual impact between data received and sent by the communication apparatus in the adjacent transmission cycles is reduced. In addition, the time domain length corresponding to the fourth time domain location is equal to the time domain length corresponding to the first data header, so that in a process of receiving and sending data in different transmission cycles, the communication apparatus determines that the time domain length corresponding to the first data header is equal to the time domain length corresponding to the fourth time domain location, to reduce the implementation complexity.

It should be understood that, in this implementation, the time domain length corresponding to the fourth time domain location may be equal to the time domain length corresponding to the first data header is a possible implementation. During actual application, the time domain length corresponding to the fourth time domain location may alternatively be not equal to the time domain length corresponding to the first data header, so that the time domain length corresponding to the fourth time domain location and the time domain length corresponding to the first data header are flexibly configured.

In a possible implementation, in step S701, the communication apparatus may determine the transmission cycle in a plurality of different implementations. The following separately describes the implementations.

Implementation 1: When the communication apparatus is a slave node, a process in which the communication apparatus determines the transmission cycle in step S701 includes: The communication apparatus receives configuration information from a master node, where the configuration information is for determining a value of m and/or a value of n. The communication apparatus determines the transmission cycle based on the configuration information.

Specifically, the communication method provided in this application may be applied to a process of bidirectional communication between different communication apparatuses having a master-slave relationship. When a communication apparatus is the slave node, the communication apparatus may determine the value of m and/or the value of n based on configuration information of the master node, and further determine the transmission cycle based on the value of m and/or the value of n.

Optionally, when the configuration information is for determining the value of m, the value of n may be preconfigured in the communication apparatus. Similarly, when the configuration information is for determining the value of n, the value of m may be preconfigured in the communication apparatus.

Further, optionally, the configuration information further includes: the time domain length corresponding to the third time domain location, and/or the time domain length corresponding to the fourth time domain location. Specifically, when the transmission cycle further includes the third time domain location and the fourth time domain location, the configuration information sent by the master node to the slave node may further include the time domain length corresponding to the third time domain location and/or the time domain length corresponding to the fourth time domain location, so that the slave node determines a time domain configuration of a transmission gap in the transmission cycle.

Optionally, the time domain length corresponding to the third time domain location and/or the time domain length corresponding to the fourth time domain location may alternatively be preconfigured in the communication apparatus, so that the communication apparatus can determine a time domain configuration of the transmission gap in the transmission cycle without configuration of the master node, thereby reducing overheads.

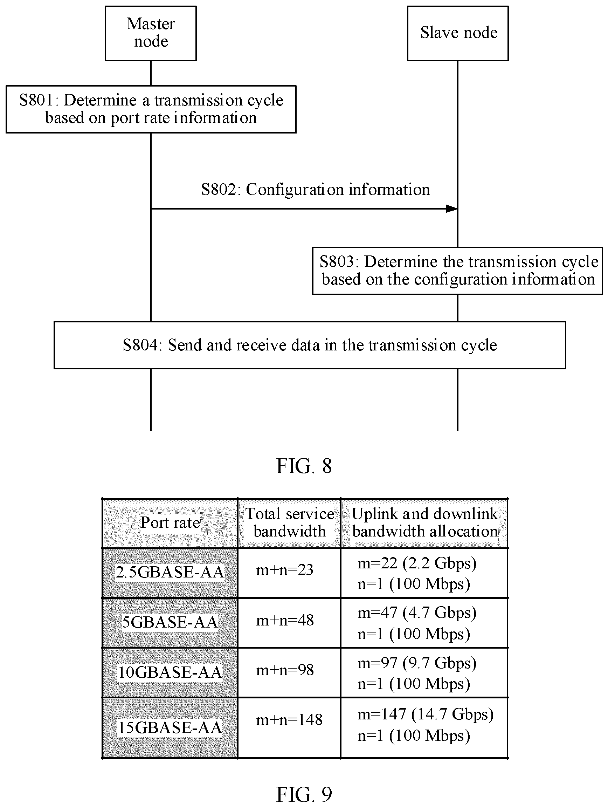

For example, the implementation shown in FIG. 7 may be further implemented in the implementation shown in FIG. 8. The communication method shown in FIG. 8 includes the following steps.

Step S801: A master node determines a transmission cycle based on port rate information.

Step S802: The master node sends configuration information to a slave node, and correspondingly the slave node receives the configuration information in step S802.

Step S803: The slave node determines the transmission cycle based on the configuration information.

Step S804: The master node and the slave node receive and send data in the transmission cycle.

In the implementation 1, the communication apparatus serves as the slave node in FIG. 8. An implementation process of step S701 may be implemented by superposing step S802 and step S803 shown in FIG. 8. An implementation process of step S702 may be implemented by using step S804 shown in FIG. 8.

Implementation 2: When the communication apparatus is the master node, the process in which the communication apparatus determines the transmission cycle in step S701 includes: The communication apparatus determines the transmission cycle based on port rate information of the communication apparatus.

Specifically, the communication method provided in this application may be applied to a process of bidirectional communication between different communication apparatuses having a master-slave relationship. When a communication apparatus is the master node, the communication apparatus can determine the transmission cycle based on the port rate information of the communication apparatus. In a process in which the communication apparatus performs bidirectional communication with other communication apparatuses, because port rates of the other communication apparatuses are not necessarily the same, the communication apparatus can determine a related configuration of the transmission cycle in a preset mapping relationship based on port rate information of the other communication apparatuses.

Optionally, the preset mapping relationship may include a mapping relationship between the port rate information and the related configuration (for example, at least one of the value of m, the value of n, the time domain length corresponding to the third time domain location, and the time domain length corresponding to the fourth time domain location) of the transmission cycle, and the preset mapping relationship may be implemented in a table, a text, a chart, or another manner. This is not limited herein.

In an implementation example, with reference to the example shown in FIG. 9, an example in which the preset mapping relationship is implemented in a form of a table is used for description below.

Specifically, encapsulation lengths of the first data sent by the communication apparatus in step S702 and the second data received by the communication apparatus in step S702 vary with MAC layer rates. As shown in FIG. 9, an example in which the MAC layer rate is 5 Gbps is used. A total number of FEC codewords in a single transmission cycle may be 48, where a MAC layer rate bandwidth corresponding to a single FEC codeword is 100 Mbps. For an uplink and downlink service bandwidth allocation case, for example, m=47 and n=1, the case is equivalent to a downlink bandwidth of 4.7 Gbps and an uplink bandwidth of 100 Mbps.

Similarly, as shown in FIG. 9, an example in which the MAC layer rate is 2.5 Gbps is used. A total number of FEC codewords in a single transmission cycle may be 23, where a MAC layer rate bandwidth corresponding to a single FEC codeword is 100 Mbps. For an uplink and downlink service bandwidth allocation case, for example, m=22 and n=1, the case is equivalent to a downlink bandwidth of 2.2 Gbps and an uplink bandwidth of 100 Mbps.

Similarly, as shown in FIG. 9, an example in which the MAC layer rate is 10 Gbps is used. A total number of FEC codewords in a single transmission cycle may be 98, where a MAC layer rate bandwidth corresponding to a single FEC codeword is 100 Mbps. For an uplink and downlink service bandwidth allocation case, for example, m=97 and n=1, the case is equivalent to a downlink bandwidth of 9.7 Gbps and an uplink bandwidth of 100 Mbps.

Similarly, as shown in FIG. 9, an example in which the MAC layer rate is 15 Gbps is used. A total number of FEC codewords in a single transmission cycle may be 148, where a MAC layer rate bandwidth corresponding to a single FEC codeword is 100 Mbps. For an uplink and downlink service bandwidth allocation case, for example, m=147 and n=1, the case is equivalent to a downlink bandwidth of 14.7 Gbps and an uplink bandwidth of 100 Mbps.

It should be understood that, FIG. 9 shows an example in which the preset mapping relationship may include a mapping relationship between the port rate information and the related configuration (the value of m and the value of n) of the transmission cycle. During actual application, as described above, another implementation may be used. This is not specifically limited herein. In addition, "the value of m" and "the value of n" in FIG. 9 are an implementation example. During actual application, proper modification may also be made. For example, "the value of n" is increased and "the value of m" is decreased on a premise that a sum of "m+n" in the 2^{nd} column are controlled to remain unchanged.

Optionally, in the implementation 2, when the communication apparatus is the master node, if the communication apparatus supports transmission of only one port rate, the related configuration of the transmission cycle may be written to the communication apparatus in a pre-configuration manner, so that the communication apparatus does not need to determine the transmission cycle based on the port rate information of the communication apparatus.

Optionally, in the implementation 2, when the communication apparatus is the master node, the communication apparatus may alternatively determine the related configuration of the transmission cycle based on an instruction entered by a user, so that the communication apparatus can also support personalized configuration of the user without determining the transmission cycle based on the port rate information of the communication apparatus.

In the implementation 2, the communication apparatus serves as the master node in FIG. 8. The implementation process of step S701 may be implemented by using step S801 shown in FIG. 8. The implementation process of step S702 may be implemented by using step S804 shown in FIG. 8.

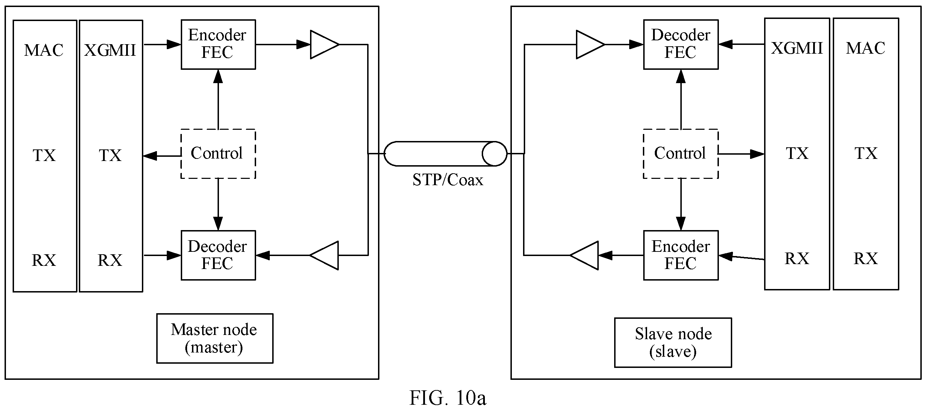

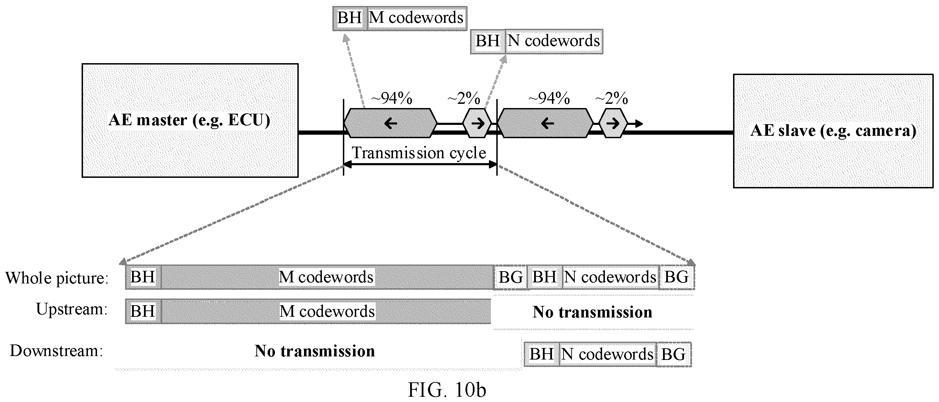

The following further describes the foregoing implementation 1 and implementation 2 by using implementation examples shown in FIG. 10a and FIG. 10b.

As shown in FIG. 10a, in this solution, there is a master-slave structure between two parties in communication between nodes. To be specific, one node is a master node (Master), and the other node is a slave node (Slave). In other words, the communication apparatus provided in this application may serve as the master or the slave in FIG. 10a. Under control of TDD control (control module), data is sent and received based on the transmission cycle shown above.

Optionally, an implementation of a process of determining a master-slave relationship between different nodes is not limited in this application. For example, the master-slave relationship may be a master-slave relationship set by a device before delivery, a master-slave relationship set by a user by entering an instruction, or another implementation. This is not limited herein.

Optionally, a medium for communication between the master node and the slave node in this application may be a shielded single-pair cable (shielded twisted-pair, STP), a coaxial cable (coaxial cable, referred to as coax for short), or another implementation. This is not limited herein.

FIG. 10b is an overall summary diagram of sent data and received data in the transmission cycle. In FIG. 10b, an example in which both the first data and the second data are bursts (bursts) is used. Correspondingly, the first data header and the second data header may be marked as burst headers (burst headers, BHs), and the third time domain location and the fourth time domain location that serve as gaps may be marked as burst gaps (burst gaps, BGs).

In FIG. 10b, from a perspective of a link, sending of uplink and downlink services and inserted BGs are respectively on the link. From a perspective of uplink and downlink of the services, in one transmission cycle, sending of an uplink or downlink service occupies only a part of the transmission cycle. To be specific, at a same moment, data is sent in only one direction (namely, a time domain location other than a BG) or no data is sent in both directions (namely, a time domain location in which a BG is located).

Implementation 3: The communication apparatus determines the related configuration of the transmission cycle in the pre-configuration manner, in a manner of the instruction entered by the user, or in a manner of negotiation between different communication apparatuses. In other words, the communication method may be applied to a process of bidirectional communication between different communication apparatuses that do not have a master-slave relationship, to adapt to different application scenarios.

In a possible implementation,
In the first data sent by the communication apparatus in step S702, the m codewords are data obtained through scrambling, and the first data header is data obtained without scrambling; and/or
in the second data received by the communication apparatus in step S702, the n codewords are data obtained through scrambling, and the second data header is data obtained without scrambling.

Specifically, in the first data sent by the communication apparatus in step S702, the communication apparatus may scramble to-be-sent payload (payload) information, to obtain the m codewords, so as to improve direct current balance of the sent data of the communication apparatus. In addition, the communication apparatus may not need to scramble the first data header that carries the management information, the overhead information, and the like, so that a receiver of the sent data quickly parses the m codewords based on the first data header. Similarly, in the second data received by the communication apparatus in step S702, a sender of the second data may scramble to-be-sent payload (payload) information, to obtain the n codewords, so as to improve direct current balance of the data. In addition, the sender of the second data may not need to scramble the second data header that carries the management information, the overhead information, and the like, so that the communication apparatus quickly parses the n codewords based on the second data header.

Optionally, in the first data, the first data header is data obtained through scrambling. Similarly, in the second data, the second data header is data obtained through scrambling. In this way, the communication apparatus performs scrambling processing on all to-be-sent data without distinguishing processing, to reduce complexity.

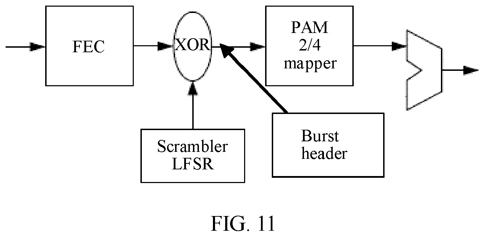

The following describes an example of an implementation process shown in FIG. 11.

As shown in FIG. 11, FEC (360, 326) is used as an example. A process of generating a single FEC codeword is as follows: 64B/65B coding is performed on service data. After coding, FEC coding is performed on 50 65B code blocks that are used as a group, to obtain a 340-bit check code. Then, 10-bit OAM is added. Finally, an FEC codeword of 64/65b*50+10b+340b=3600 bit is formed. In FIG. 11, after the FEC codeword is encapsulated, scrambling processing is performed. After the scrambling processing is completed, a BH is added before sending, in other words, the BH does not participate in scrambling.

In a possible implementation, in step S702, a specific process in which the communication apparatus sends first data at the first time domain location of the transmission cycle includes: The communication apparatus obtains a first media access control (media access control, MAC) frame at the first time domain location of the transmission cycle. The communication apparatus sends the first data based on the MAC frame.

Specifically, the first data sent by the communication apparatus at the first time domain location of the transmission cycle is generated based on the MAC frame, so that the communication method can be applied to Ethernet, and a feature of backward compatibility of a frame format and a protocol of a MAC layer in the Ethernet is inherited. In other words, frame formats and protocols (same or similar) of MAC layers in different Ethernet protocols may be compatible with each other, to inherit an Ethernet ecosystem.

Further, the communication apparatus includes a MAC layer entity, a PMA layer entity, and a control module, and a process in which the communication apparatus obtains a MAC frame at the first time domain location of the transmission cycle includes: At a start moment of the first time domain location of the transmission cycle, the control module sends, to the MAC layer entity, indication information indicating the MAC layer entity to send data, and the control module sends, to the PMA layer entity, indication information indicating the PMA layer entity to send data. After the start moment of the first time domain location of the transmission cycle and before an end moment of the first time domain location of the transmission cycle, the control module receives the MAC frame from the MAC layer entity (where a number of MAC frames herein may be an integer, for example, one or more, or may be a non-integer, for example, 0.4, 2.3, or 2.4, which is not limited herein). At the end moment of the first time domain location of the transmission cycle, the control module sends, to the MAC layer entity, indication information indicating the MAC layer entity to stop sending data, and the control module sends, to the PMA layer entity, indication information indicating the PMA layer entity to stop sending data.

Specifically, the communication apparatus may further include the control module. The control module may separately indicate, at different moments corresponding to the first time domain location of the transmission cycle, a MAC layer and a PMA layer to send or stop sending, so that the communication apparatus sends the first data at the first time domain location based on the obtained MAC frame, and the communication apparatus stops obtaining the MAC frame at a time domain location other than the first time domain location, to avoid a problem of service flow aggregation.

In a possible implementation, the communication apparatus includes the PMA layer entity and the control module, and that the communication apparatus receives second data at the second time domain location of the transmission cycle includes: At a start moment of the second time domain location of the transmission cycle, the control module sends, to the PMA layer entity, indication information indicating to receive data. After the start moment of the second time domain location of the transmission cycle and before an end moment of the second time domain location of the transmission cycle, the PMA layer entity receives the second data. At the end moment of the second time domain location of the transmission cycle, the control module sends, to the PMA layer entity, indication information indicating to stop receiving data.

Specifically, the communication apparatus may further include the control module. The control module may separately indicate, at different moments corresponding to the second time domain location of the transmission cycle, the PMA layer to receive or stop receiving data, so that the communication apparatus receives data at the second time domain location, and the communication apparatus stops receiving data at a time domain location other than the second time domain location, to avoid the problem of the service flow aggregation.

Optionally, the control module is located at a physical (physical, PHY) layer entity of the communication apparatus.

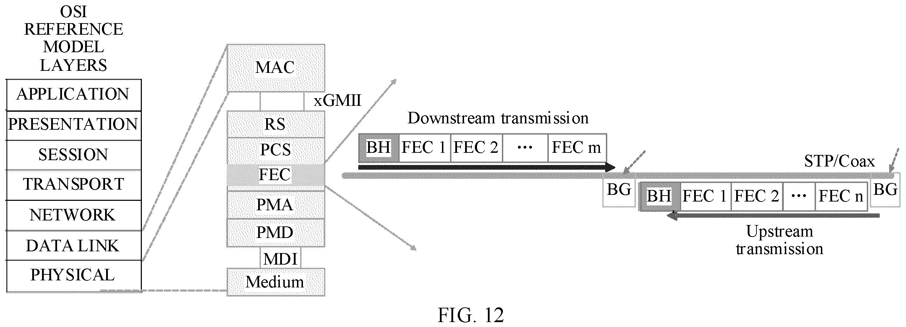

Further, optionally, the control module may be located at a reconciliation sublayer (reconciliation sublayer, RS), a physical coding sublayer (physical coding sublayer, PCS), PMA, a physical medium dependent (physical medium dependent, PMD) layer, an FEC layer (which is also referred to as an RS-FEC layer) or another sublayer in the PHY. Alternatively, the control module may be located at a newly added independent sublayer different from the RS, the PCS, the PMA, the PMD, or the another sublayer in the PHY This is not limited herein. The following provides descriptions with reference to an example shown in FIG. 12 by using an example in which the control module is located in the newly added independent sublayer different from the RS, the PCS, the PMA, the PMD, or the another sublayer in the PHY.

As shown in FIG. 12, the left side of FIG. 12 is layers of the standard Ethernet (refer to the foregoing descriptions of FIG. 1). In this application, a layer of the control module configured to implement a control function is added to an Ethernet physical layer, and the control function is closely related to the FEC. Herein, the foregoing descriptions of "an example in which both the first data and the second data are bursts (bursts) is used" are still used herein, and asymmetry of uplink and downlink service bandwidths is controlled by using different encapsulated burst lengths. As shown on the right side of the figure, two arrows respectively represent data sent in two directions, only one burst (to be specific, the first data or the second data) is sent in each direction each time, and a BG exists between the uplink and downlink bursts.

In addition, encapsulation of the burst includes a BH and several FEC codewords, where a number of FEC codewords is an integer. Specifically, there are m FEC codewords in an uplink direction of the burst, and there are n FEC codewords in a downlink direction of the burst, where both m and n are positive integers and have a value relationship, and m>n, or m<n (generally, a downlink service bandwidth is greater than an uplink service bandwidth). A length of the BH is equal to a length of the BG, and is half of a length of an FEC codeword, or is k times the length of the FEC codeword (a value of k is described above, and details are not described herein again).

It can be learned from FIG. 12 that, in the solution provided in this application, uplink and downlink bursts form a transmission cycle, and a service is sent cyclically based on the transmission cycle. It should be noted that, after determining the transmission cycle, the communication apparatus may receive and send data in the transmission cycle (namely, step S702) for one or more times. An execution policy of receiving and sending data in the transmission cycle by the communication apparatus is not limited in this application. The execution policy includes a number of times of repeatedly receiving and sending data in the transmission cycle, duration of repeatedly receiving and sending data in the transmission cycle, and the like. For example, the communication apparatus may determine, based on a preconfigured execution policy, the execution policy of receiving and sending data in the transmission cycle. For another example, the communication apparatus may determine, based on an instruction entered by a user, the execution policy of receiving and sending data in the transmission cycle.

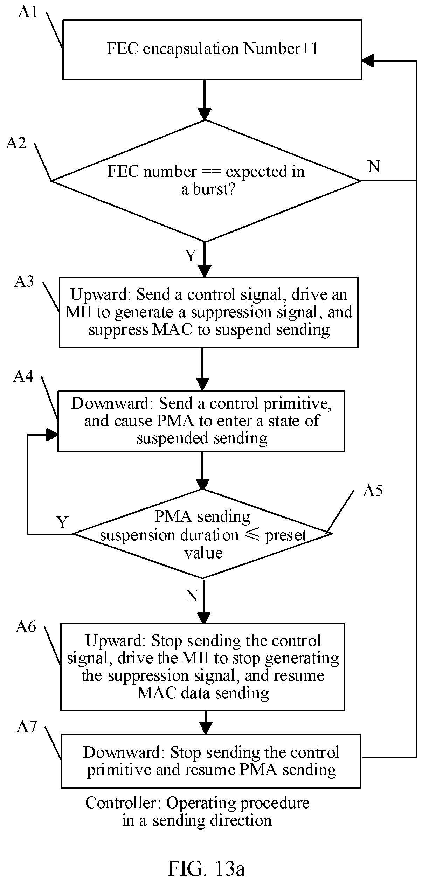

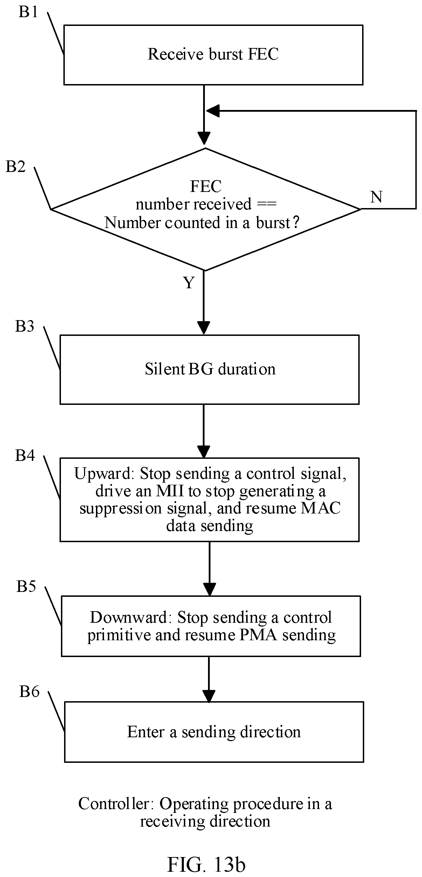

For example, the following further describes an operating procedure of the foregoing control module (namely, a controller in FIG. 13a and FIG. 13b) with reference to implementation examples shown in FIG. 13a and FIG. 13b.

As shown in FIG. 13a, a process in which the communication apparatus sends the first data in step S702 may include the following implementation process.

A1: FEC encapsulation, to record a number of encapsulated codewords, namely, "Number+1".

A2: Determine whether an FEC number == expected in a burst. If no, step A1 is performed; or if yes, step A3 is performed.

A3: Upward (to be specific, to an upper-layer protocol layer): Send a control signal, drive an MII to generate a suppression signal, and suppress MAC to suspend sending.

A4: Downward (to be specific, to a lower-layer protocol layer): Send a control primitive, to cause a PMAto enter a state of suspended sending.

A5: Determine whether PMA sending suspension duration is less than or equal to a preset value (namely, duration corresponding to the first time domain location). If yes, step A4 is performed; or if no, step A6 is performed.

A6: Upward: Stop sending the control signal, drive the MII to stop the suppression signal, and resume sending MAC data.

A7. Downward: Stop sending the control primitive, and resume PMA sending.

As shown in FIG. 13b, the process in which the communication apparatus sends the first data in step S702 may include the following implementation process.

B1: Receive burst FEC.

B2: Determine whether an FEC number received == Number counted in a burst. If no, step B1 is performed; or if yes, step B3 is performed.

B3: Silent BG duration.

B4: Upward: Stop sending the control signal, drive the MII to stop the suppression signal, and resume sending MAC data.

B5: Downward: Stop sending a control primitive, and resume PMA sending.

B6: Enter a sending direction.

In the foregoing implementation process, the control module controls cooperation between a MAC layer and a PMA layer based on a preset cycle, and mainly triggers corresponding primitives (primitives) to be enabled and disabled by sending the control signal. Specifically, during sending suspension in the sending direction, the control module sends a signal to cause a PLS_CARRIER. indication primitive to be set to on enable, so that the MAC stops sending data. When transmission is resumed from a sending suspension period, the control module triggers the primitive to be set to off disable, so that the MAC resumes sending data. Similarly, during sending suspension, the control signal is sent to set the PMA_LINK.request primitive to disable, so that PHY enters the sending suspension period, to save power consumption. When the transmission is resumed, the PMA_LINK. request primitive is set to enable, so that PHY enters a sending state.

It can be learned from the foregoing implementation process that, a function of the control module is mainly configured to control receiving and sending of data based on a preset burst length, and the control module cooperates with the MAC layer and the PMA layer, to avoid a problem of service flow aggregation (For example, the service flow aggregation means that an upper-layer service still sends data in a sending suspension period of a node. This causes service flow aggregation at a sending end. Specifically, a physical layer stops sending data, but a service layer MAC still sends data to the physical layer. In this case, data is easily accumulated at the physical layer).

In a possible implementation, the first data header sent by the communication apparatus in step S702 includes first indication information, and the first indication information indicates the value of m; and/or the second data header received by the communication apparatus in step S702 includes second indication information, and the second indication information indicates the value of n.

Specifically, the first data header of the first data sent by the communication apparatus in step S702 may include the first indication information indicating the value of m, so that a receiver of the first data can parse the m codewords based on the first indication information. Similarly, the second data header of the second data received by the communication apparatus in step S702 may include second indication information indicating the value of n, so that the communication apparatus can parse the n codewords based on the second indication information.

In a possible implementation,
the first data header includes at least one of the following:
third indication information, where the third indication information indicates an adjustment request of an expected number of codewords;
fourth indication information, where the fourth indication information indicates an adjustment acknowledgment of accepting or rejecting an expected number of codewords; or
fifth indication information, where the fifth indication information indicates an adjustment commit of an expected number of codewords, and a value of a number of codewords that the communication apparatus expects to send is m; and/or
the second data header includes at least one of the following:
   sixth indication information, where the sixth indication information indicates an adjustment request of an expected number of codewords;
   seventh indication information, where the seventh indication information indicates an adjustment acknowledgment of accepting or rejecting an expected number of codewords; or
   eighth indication information, where the eighth indication information indicates an adjustment commit of an expected number of codewords, and a value of a number of codewords that the second node expects to send is n.

Based on the foregoing technical solution, the first data header of the first data sent by the communication apparatus or the second data header of the second data received by the communication apparatus may further negotiate to adjust the value of m or the value of n based on a length adjustment mechanism of a length adjustment request (length adjustment request, LAR), a length adjustment acknowledgment (length adjustment acknowledgment, LAA), and a length adjustment commit (length adjustment commit, LAC), to implement flexible adjustment of a receiving and sending rate of data.

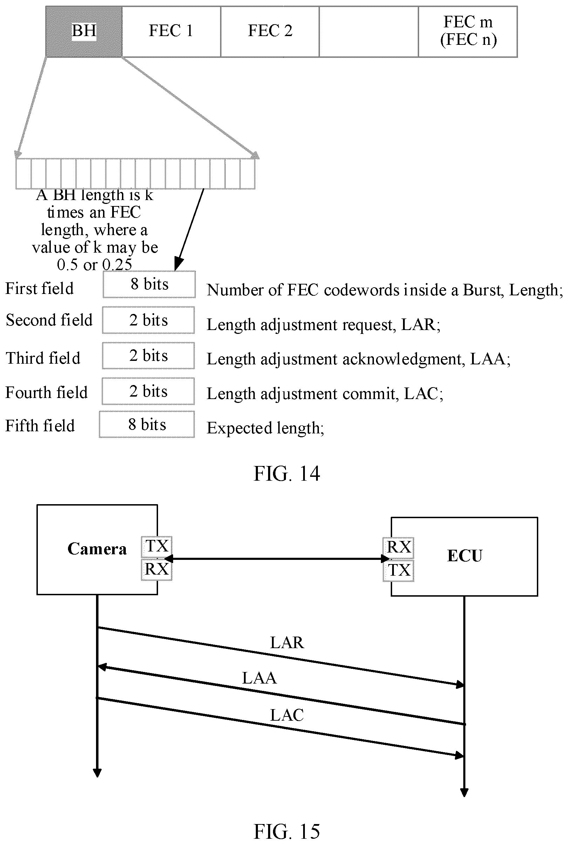

The following describes an example of an implementation process of the foregoing plurality of pieces of indication information with reference to an implementation example shown in FIG. 14.

In FIG. 14, a first field specifically indicates a number of FEC codewords inside a burst, namely, a length (Number of FEC codewords inside a Burst, Length), a second field indicates a length adjustment request (length adjustment request, LAR), a third field indicates a length adjustment acknowledgment (length adjustment acknowledgment, LAA), a fourth field indicates a length adjustment commit (length adjustment commit, LAC), and a fifth field indicates an expected length (expected length), namely, an expected number of codewords.

Optionally, in an implementation process of the fifth field, when normal operation is performed without adjustment, a value of "length" h in the first field is the same as a value of "expected length" h in the fifth field. However, in an adjustment process, the two values may be different. In other words, when a value of the LAR is adjusted, a value of the expected length h may be different from a value of the length.

The first indication information (or the second indication information) may be implemented by using the first field shown in FIG. 14. Therefore, after receiving a BH, a receiver compares an indication value of a number of received FEC codewords with that of a number of actually received FEC codewords. If the two values are consistent, no error occurs and normal processing is performed. If an error occurs, a number of errors is counted. When the number of errors reaches a specific value, a link quality alarm is generated.

The third indication information (or the sixth indication information) may be jointly indicated by using the second field and the fifth field shown in FIG. 14. Therefore, after receiving the BH, when determining that a value of the second field indicates that the length adjustment request exists, the receiver needs to read the fifth field and determine, based on the "expected number of codewords" indicated by the fifth field, that a sender has an adjustment request of a number of codewords. Subsequently, the receiver may perform an LAA reply based on the adjustment request, to indicate whether to respond to (or accept) the request.

The fourth indication information (or the seventh indication information) may be jointly indicated by using the third field and the fifth field shown in FIG. 14. Therefore, after receiving the BH, when determining that a value of the third field indicates that the length adjustment acknowledgment exists, the receiver determines, based on the value of the third field, whether the sender responds to (or accepts) the length adjustment request.

The fifth indication information (or the eighth indication information) may be jointly indicated by using the fourth field and the fifth field shown in FIG. 14. Therefore, after receiving the BH, when determining that a value of the fourth field indicates that the length adjustment commit exists, the receiver determines, based on the value of the fourth field, whether the sender commits the length adjustment request.

It should be understood that in the implementation shown in FIG. 14, values of numbers of bytes (or numbers of bits) of different fields and an order of the different fields are not limited in this application. Values of numbers of bytes (or numbers of bits) of different fields in the implementation shown in FIG. 14 and an order of the different fields are merely an implementation example. The values of numbers of bytes (or numbers of bits) of the different fields in the implementation shown in FIG. 14 may alternatively be other values, and the order of the different fields in the implementation shown in FIG. 14 may alternatively be another field order. This is not limited herein. In addition, the different fields in the frame format shown in FIG. 14 may be independently implemented.

Therefore, in a running process of the communication method, when a service data amount changes or initial configuration is unreasonable, there is a requirement that a number of uplink and downlink FEC codewords needs to be adjusted, and the number of FEC codewords may be adjusted through negotiation between different communication apparatuses.

In an implementation example, with reference to an implementation shown in FIG. 15, the following describes an example of an implementation process to which the communication method is applied and in which a master node is an ECU, a slave node is a camera (Camera), and the slave node initiates adjustment of a number of FEC codewords. As shown in FIG. 15, the camera initiates an LAR request, requests to adjust a bandwidth, and adds an expected bandwidth value to an expected length field. The ECU receives the request, and determines whether to accept adjustment based on the received expected length value. If the adjustment is accepted, the ECU replies with an LAA. After receiving the LAA from the ECU, the camera sends an LAC, indicating that the LAA is received and burst FEC sending is performed based on a new expected length value in a next cycle.

Based on the foregoing technical solution, after the communication apparatus determines the transmission cycle in step S701, in step S702, the communication apparatus sends the first data at the first time domain location of the transmission cycle, and the communication apparatus receives the second data at the second time domain location of the transmission cycle. The transmission cycle includes the first time domain location and the second time domain location that do not overlap each other in time domain. To be specific, the communication apparatus separately performs a data sending process and a data receiving process at the time domain locations that do not overlap each other in the transmission cycle. In other words, in a process in which the communication apparatus implements bidirectional communication based on the transmission cycle, the time domain location carrying the sent data of the communication apparatus and the time domain location carrying the received data of the communication apparatus are the time domain locations that do not overlap each other, so that the sent data of the communication apparatus and the received data of the communication apparatus are isolated from each other in time domain. Therefore, because mutual impact between the sent data and the received data of the communication apparatus can be reduced without adding a new component, in comparison with a process of bidirectional communication implemented based on an EC technology and a hybrid technology, the process of bidirectional communication provided in the method can reduce costs and reduce power consumption, to improve communication efficiency.

The foregoing describes embodiments of this application from a perspective of a method, and the following describes the communication apparatus provided in embodiments of this application from a perspective of an apparatus.

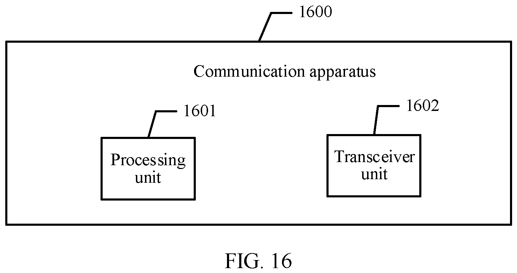

Refer to FIG. 16. An embodiment of this application provides a communication apparatus. A communication apparatus 1600 can implement a function of the communication apparatus in the foregoing method embodiments, and therefore can implement beneficial effects of the foregoing method embodiments.

The communication apparatus 1600 includes a processing unit 1601 and a transceiver unit 1602.

The processing unit 1601 is configured to determine a transmission cycle. The transmission cycle includes a first time domain location and a second time domain location that do not overlap each other in time domain, the first time domain location is for carrying data sent by the communication apparatus, and the second time domain location is for carrying data received by the communication apparatus.

The transceiver unit 1602 is configured to send first data at the first time domain location of the transmission cycle, and the transceiver unit 1602 is further configured to receive second data at the second time domain location of the transmission cycle. The first data includes m codewords, the m codewords include m codewords, the second data includes n codewords, the n codewords include n codewords, and both m and n are integers greater than or equal to 1.

In a possible implementation,
the first data further includes a first data header, and the second data further includes a second data header.

A time domain length corresponding to the first data header is equal to a time domain length corresponding to the second data header.

In a possible implementation,
the transmission cycle further includes a third time domain location between the first time domain location and the second time domain location, and a time domain length corresponding to the third time domain location is equal to the time domain length corresponding to the first data header.

In a possible implementation,
the transmission cycle further includes a fourth time domain location, where a start moment of the fourth time domain location is the same as a start moment of the transmission cycle, or an end moment of the fourth time domain location is the same as an end moment of the transmission cycle.

A time domain length corresponding to the fourth time domain location is equal to the time domain length corresponding to the first data header.

In a possible implementation,
an amount of data carried by the first data header is k times a codeword length, k is less than or equal to 0.5, and k is greater than or equal to 0.25.

In a possible implementation, the first data further includes the first data header, and the second data further includes the corresponding second data header.

The amount of the data carried by the first data header is equal to an amount of data carried by the second data header.

In a possible implementation,
in the first data, the m codewords are data obtained through scrambling, and the first data header is data obtained without scrambling; and/or
in the second data, the n codewords are data obtained through scrambling, and the second data header is data obtained without scrambling.

In a possible implementation, the communication apparatus is a slave node.

The transceiver unit 1602 is further configured to receive configuration information from a master node, where the configuration information is for determining a value of m and/or a value of n.

The processing unit 1601 is configured to determine the transmission cycle based on the configuration information.

In a possible implementation, the configuration information further includes:
the time domain length corresponding to the third time domain location, and/or the time domain length corresponding to the fourth time domain location.

In a possible implementation, the communication apparatus is a master node.

The processing unit 1601 is specifically configured to determine the transmission cycle based on port rate information of the communication apparatus.

In a possible implementation,
m is not equal to n.

In a possible implementation,
both the m codewords and the n codewords are codewords obtained based on FEC.

In a possible implementation, the transceiver unit 1602 is specifically configured to:
obtain a MAC frame at the first time domain location of the transmission cycle, and
send the first data based on the MAC frame.

In a possible implementation, the communication apparatus further includes a MAC layer entity and a PMA layer entity, the transceiver unit 1602 includes a control module, and that the transceiver unit 1602 obtains the MAC frame at the first time domain location of the transmission cycle includes the following.

At a start moment of the first time domain location of the transmission cycle, the control module sends, to the MAC layer entity, indication information indicating the MAC layer entity to send data, and the control module sends, to the PMA layer entity, indication information indicating the PMA layer entity to send data.

After the start moment of the first time domain location of the transmission cycle and before an end moment of the first time domain location of the transmission cycle, the control module receives the MAC frame from the MAC layer entity.

At the end moment of the first time domain location of the transmission cycle, the control module sends, to the MAC layer entity, indication information indicating the MAC layer entity to stop sending data, and the control module sends, to the PMA layer entity, indication information indicating the PMA layer entity to stop sending data.

In a possible implementation, the communication apparatus further includes the PMA layer entity, the transceiver unit 1602 includes the control module, and that the communication apparatus receives the second data at the second time domain location of the transmission cycle includes the following.

At a start moment of the second time domain location of the transmission cycle, the control module sends, to the PMA layer entity, indication information indicating to receive data.

After the start moment of the second time domain location of the transmission cycle and before an end moment of the second time domain location of the transmission cycle, the PMA layer entity receives the second data.

At the end moment of the second time domain location of the transmission cycle, the control module sends, to the PMA layer entity, indication information indicating to stop receiving the data.

In a possible implementation, the transceiver unit 1602 is located at a physical layer device (PHYSICAL LAYER DEVICE) of the communication apparatus.

In a possible implementation,
the first data header includes first indication information, and the first indication information indicates the value of m; and/or
the second data header includes second indication information, and the second indication information indicates the value of n.

In a possible implementation,
the first data header includes at least one of the following:
third indication information, where the third indication information indicates an adjustment request of an expected number of codewords;
fourth indication information, where the fourth indication information indicates an adjustment acknowledgment of accepting or rejecting an expected number of codewords; or
fifth indication information, where the fifth indication information indicates an adjustment commit of an expected number of codewords, and a value of a number of codewords that the communication apparatus expects to send is m; and/or
the second data header includes at least one of the following:
   sixth indication information, where the sixth indication information indicates an adjustment request of an expected number of codewords;
   seventh indication information, where the seventh indication information indicates an adjustment acknowledgment of accepting or rejecting an expected number of codewords; or
   eighth indication information, where the eighth indication information indicates an adjustment commit of an expected number of codewords, and a value of a number of codewords that the second node expects to send is n.

It should be noted that, for content such as an information execution process of units in the communication apparatus 1600, refer to descriptions in the foregoing method embodiments of this application. Details are not described herein again.

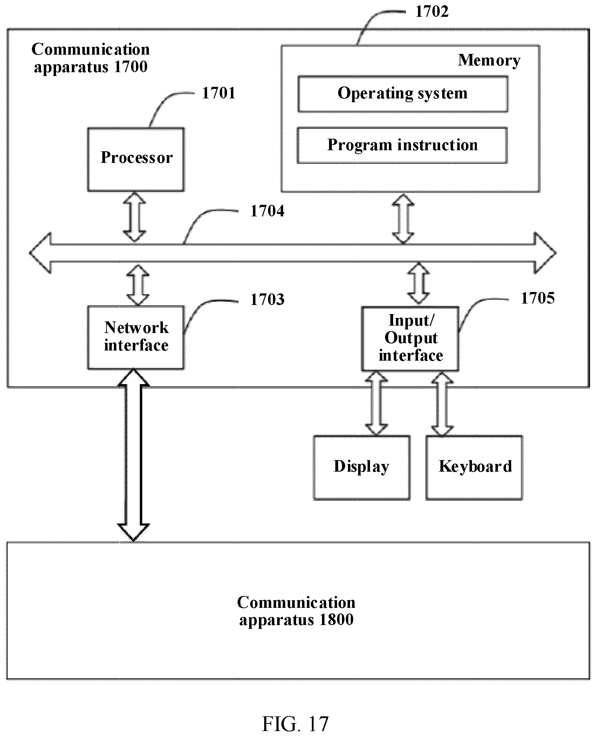

An embodiment of this application further provides a communication apparatus 1700. FIG. 17 is a diagram of a structure of the communication apparatus 1700 according to an embodiment of this application.

Optionally, the communication apparatus 1700 performs a function of the communication apparatus (for example, the communication apparatus in the implementation shown in FIG. 7 or the communication apparatus 1600 in FIG. 16) in any one of the foregoing embodiments.

Optionally, a communication apparatus 1800 in FIG. 17 may be configured to perform a function of another communication apparatus. For example, when the communication apparatus 1700 is a master node, the communication apparatus 1800 may be configured to perform a function of a slave node. For another example, when the communication apparatus 1700 is a slave node, the communication apparatus 1800 may be configured to perform a function of a master node.

As shown in FIG. 17, the communication apparatus 1700 includes a memory 1702 and at least one processor 1701.

Optionally, the processor 1701 implements the method in the foregoing embodiments by reading instructions stored in the memory 1702, or the processor 1701 may implement the method in the foregoing embodiments by executing instructions stored inside. When the processor 1701 implements the method in the foregoing embodiments by reading the instructions stored in the memory 1702, the memory 1702 stores the instructions for implementing the method provided in the foregoing embodiments of this application.

Optionally, the at least one processor 1701 is one or more CPUs or a single-core CPU, or may be a multi-core CPU.

The memory 1702 includes but is not limited to a RAM, a ROM, an EPROM, a flash memory, an optical memory, or the like. The memory 1702 stores instructions of an operating system.

After program instructions stored in the memory 1702 are read by the at least one processor 1701, the communication apparatus performs a corresponding operation in the foregoing embodiments.

Optionally, the communication apparatus shown in FIG. 17 further includes a network interface 1703. The network interface 1703 may be a wired interface, for example, an FDDI or a GE interface. The network interface 1703 may alternatively be a wireless interface. The network interface 1703 is configured to receive/send data in the foregoing embodiments.

After the processor 1701 reads the program instructions in the memory 1702, for another function that can be executed by the communication apparatus 1700, refer to descriptions in the foregoing method embodiments.

Optionally, the communication apparatus 1700 further includes a bus 1704. The processor 1701 and the memory 1702 are usually connected to each other through the bus 1704, or may be connected to each other in another manner.

Optionally, the communication apparatus 1700 further includes an input/output interface 1705. The input/output interface 1705 is configured to: connect to an input device, and receive related configuration information (for example, a value of m, a value of n, a time domain length corresponding to a third time domain location, and a time domain length corresponding to a fourth time domain location) that is input by a user or another device that can associate with the communication apparatus 1700 by using the input device. The input device includes but is not limited to, a keyboard, a touchscreen, a microphone, and the like.

The communication apparatus 1700 provided in this embodiment of this application is configured to perform the methods performed by the communication apparatus provided in the foregoing method embodiments, and implement corresponding beneficial effects.

For example, when the communication apparatus 1700 performs a function of the communication apparatus (or the communication apparatus 1600 in FIG. 16) in the embodiment shown in FIG. 7, after the communication apparatus 1700 determines a transmission cycle, the communication apparatus 1700 sends first data at a first time domain location of the transmission cycle, and the communication apparatus 1700 receives second data at a second time domain location of the transmission cycle. Correspondingly, the communication apparatus 1800 receives the first data at the first time domain location of the transmission cycle, and the communication apparatus 1800 sends the second data at the second time domain location of the transmission cycle. That is, the communication apparatus 1700 and the communication apparatus 1800 separately perform a process of sending data and a process of receiving data at time domain locations that do not overlap each other in the transmission cycle. In other words, in a process in which the communication apparatus 1700 and the communication apparatus 1800 implement bidirectional communication based on the transmission cycle, for a communication apparatus (for example, the communication apparatus 1700 or the communication apparatus 1800), because a time domain location carrying sent data and a time domain location carrying received data are time domain locations that do not overlap each other, the sent data of the communication apparatus and the received data of the communication apparatus are enabled to be isolated from each other in time domain.

In a possible implementation, the first data includes m codewords, the second data includes n codewords, and both m and n are integers greater than or equal to 1.

In a possible implementation,
the first data further includes a first data header, and the second data further includes a second data header.

A time domain length corresponding to the first data header is equal to a time domain length corresponding to the second data header.

In a possible implementation,
the transmission cycle further includes a third time domain location between the first time domain location and the second time domain location, and a time domain length corresponding to the third time domain location is equal to the time domain length corresponding to the first data header.

In a possible implementation,
the transmission cycle further includes a fourth time domain location, where a start moment of the fourth time domain location is the same as a start moment of the transmission cycle, or an end moment of the fourth time domain location is the same as an end moment of the transmission cycle.

A time domain length corresponding to the fourth time domain location is equal to the time domain length corresponding to the first data header.

In a possible implementation,
an amount of data carried by the first data header is k times a codeword length, k is less than or equal to 0.5, and k is greater than or equal to 0.25.

In a possible implementation, the first data further includes the first data header, and the second data further includes the second data header.

An amount of data carried by the first packet header is equal to an amount of data carried by the second packet header.

In a possible implementation,
in the first data, the m codewords are data obtained through scrambling, and the first data header is data obtained without scrambling; and/or
in the second data, the n codewords are data obtained through scrambling, and the second data header is data obtained without scrambling.

In a possible implementation, the communication apparatus 1700 is a slave node.

The communication apparatus 1700 receives configuration information from a master node, where the configuration information is for determining a value of m and/or a value of n.

The communication apparatus 1700 determines the transmission cycle based on the configuration information.

In a possible implementation, the configuration information further includes:
the time domain length corresponding to the third time domain location, and/or the time domain length corresponding to the fourth time domain location.

In a possible implementation, the communication apparatus 1700 is a master node.

The communication apparatus 1700 determines the transmission cycle based on port rate information of the communication apparatus 1700.

In a possible implementation,
m is not equal to n.

In a possible implementation,
both the m codewords and the n codewords are codewords obtained based on FEC.

In a possible implementation,
the communication apparatus 1700 obtains a MAC frame at the first time domain location of the transmission cycle, and
the communication apparatus 1700 sends the first data based on the MAC frame.

In a possible implementation, the communication apparatus 1700 further includes a MAC layer entity and a PMA layer entity, the communication apparatus 1700 includes a control module, and that the communication apparatus 1700 obtains the MAC frame at the first time domain location of the transmission cycle includes the following.

At a start moment of the first time domain location of the transmission cycle, the control module sends, to the MAC layer entity, indication information indicating the MAC layer entity to send data, and the control module sends, to the PMA layer entity, indication information indicating the PMA layer entity to send data.

After the start moment of the first time domain location of the transmission cycle and before an end moment of the first time domain location of the transmission cycle, the control module receives the MAC frame from the MAC layer entity.

At the end moment of the first time domain location of the transmission cycle, the control module sends, to the MAC layer entity, indication information indicating the MAC layer entity to stop sending data, and the control module sends, to the PMA layer entity, indication information indicating the PMA layer entity to stop sending data.

In a possible implementation, the communication apparatus 1700 further includes the PMA layer entity, and that the communication apparatus 1700 receives the second data at the second time domain location of the transmission cycle includes the following.

At a start moment of the second time domain location of the transmission cycle, the control module sends, to the PMA layer entity, indication information indicating to receive data.

After the start moment of the second time domain location of the transmission cycle and before an end moment of the second time domain location of the transmission cycle, the PMA layer entity receives the second data.

At the end moment of the second time domain location of the transmission cycle, the control module sends, to the PMA layer entity, indication information indicating to stop receiving the data.

In a possible implementation, the transceiver unit is located at a physical layer device PHYSICAL LAYER DEVICE of the communication apparatus 1700.

In a possible implementation,
the first data header includes first indication information, and the first indication information indicates the value of m; and/or
the second data header includes second indication information, and the second indication information indicates the value of n.

In a possible implementation,
the first data header includes at least one of the following:
third indication information, where the third indication information indicates an adjustment request of an expected number of codewords;
fourth indication information, where the fourth indication information indicates an adjustment acknowledgment of accepting or rejecting an expected number of codewords; or
fifth indication information, where the fifth indication information indicates an adjustment commit of an expected number of codewords, and a value of a number of codewords that the communication apparatus 1700 expects to send is m; and/or
the second data header includes at least one of the following:
   sixth indication information, where the sixth indication information indicates an adjustment request of an expected number of codewords;
   seventh indication information, where the seventh indication information indicates an adjustment acknowledgment of accepting or rejecting an expected number of codewords; or
   eighth indication information, where the eighth indication information indicates an adjustment commit of an expected number of codewords, and a value of a number of codewords that the second node expects to send is n.

Therefore, because mutual impact between the sent data and the received data of the communication apparatus 1700 can be reduced without adding a new component, in comparison with a process of bidirectional communication implemented based on an EC technology and a hybrid technology, the process of bidirectional communication provided in the method can reduce costs and reduce power consumption, to improve communication efficiency.

For a specific implementation of the communication apparatus 1700 shown in FIG. 17, refer to descriptions in the foregoing method embodiments, and corresponding technical effects can be implemented. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In conclusion, the foregoing embodiments are merely intended for describing the technical solutions of this application, but not for limiting this application. Although this application is described in detail with reference to the foregoing embodiments, a person of ordinary skill in the art should understand that the person may still make modifications to the technical solutions described in the foregoing embodiments or make equivalent replacements to a part of technical features thereof, without departing from the scope of the technical solutions of embodiments of this application.

## Claims

1. A communication method, comprising:
determining, by a communication apparatus, a transmission cycle, wherein the transmission cycle comprises a first time domain location and a second time domain location that do not overlap each other in time domain, the first time domain location is for carrying data sent by the communication apparatus, and the second time domain location is for carrying data received by the communication apparatus; and
sending, by the communication apparatus, first data at the first time domain location of the transmission cycle, and receiving, by the communication apparatus, second data at the second time domain location of the transmission cycle.

2. The method according to claim 1, wherein the first data comprises m codewords, the second data comprises n codewords, and both m and n are integers greater than or equal to 1.

3. The method according to claim 2, wherein
the first data further comprises a first data header, and the second data further comprises a second data header, wherein
a time domain length corresponding to the first data header is equal to a time domain length corresponding to the second data header, and/or an amount of data carried by the first data header is equal to an amount of data carried by the second data header.

4. The method according to claim 3, wherein
the transmission cycle further comprises a third time domain location between the first time domain location and the second time domain location, wherein
a time domain length corresponding to the third time domain location is equal to the time domain length corresponding to the first data header.

5. The method according to claim 3 or 4, wherein
the transmission cycle further comprises a fourth time domain location, wherein a start moment of the fourth time domain location is the same as a start moment of the transmission cycle, or an end moment of the fourth time domain location is the same as an end moment of the transmission cycle; and
a time domain length corresponding to the fourth time domain location is equal to the time domain length corresponding to the first data header.

6. The method according to any one of claims 3 to 5, wherein
the amount of the data carried by the first data header is k times a codeword length, k is less than or equal to 0.5, and k is greater than or equal to 0.25.

7. The method according to any one of claims 3 to 6, wherein
in the first data, the m codewords are data obtained through scrambling, and the first data header is data obtained without scrambling; and/or
in the second data, the n codewords are data obtained through scrambling, and the second data header is data obtained without scrambling.

8. The method according to any one of claims 2 to 7, wherein the communication apparatus is a slave node, and the determining, by a communication apparatus, a transmission cycle comprises:
receiving, by the communication apparatus, configuration information from a master node, wherein the configuration information is for determining a value of m and/or a value of n; and
determining, by the communication apparatus, the transmission cycle based on the configuration information.

9. The method according to claim 8, wherein the configuration information further comprises:
the time domain length corresponding to the third time domain location, and/or the time domain length corresponding to the fourth time domain location.

10. The method according to any one of claims 1 to 7, wherein the communication apparatus is a master node, and the determining, by a communication apparatus, a transmission cycle comprises:
determining, by the communication apparatus, the transmission cycle based on port rate information of the communication apparatus.

11. The method according to any one of claims 2 to 10, wherein
m is not equal to n.

12. The method according to any one of claims 2 to 11, wherein
both the m codewords and the n codewords are codewords obtained based on a forward error correction code FEC.

13. The method according to any one of claims 1 to 12, wherein the sending, by the communication apparatus, first data at the first time domain location of the transmission cycle comprises:
obtaining, by the communication apparatus, a first media access control MAC frame at the first time domain location of the transmission cycle; and
sending, by the communication apparatus, the first data based on the MAC frame.

14. The method according to claim 13, wherein the communication apparatus comprises a MAC layer entity, a physical medium attachment PMA layer entity, and a control module, and the obtaining, by the communication apparatus, a MAC frame at the first time domain location of the transmission cycle comprises:
at a start moment of the first time domain location of the transmission cycle, sending, by the control module to the MAC layer entity, indication information indicating the MAC layer entity to send data, and sending, by the control module to the PMA layer entity, indication information indicating the PMA layer entity to send data;
after the start moment of the first time domain location of the transmission cycle and before an end moment of the first time domain location of the transmission cycle, receiving, by the control module, the MAC frame from the MAC layer entity; and
at the end moment of the first time domain location of the transmission cycle, sending, by the control module to the MAC layer entity, indication information indicating the MAC layer entity to stop sending data, and sending, by the control module to the PMA layer entity, indication information indicating the PMA layer entity to stop sending data.

15. The method according to any one of claims 1 to 14, wherein the communication apparatus comprises the physical medium attachment PMA layer entity and the control module, and the receiving, by the communication apparatus, second data at the second time domain location of the transmission cycle comprises:
at a start moment of the second time domain location of the transmission cycle, sending, by the control module to the PMA layer entity, indication information indicating to receive data;
after the start moment of the second time domain location of the transmission cycle and before an end moment of the second time domain location of the transmission cycle, receiving, by the PMA layer entity, the second data; and
at the end moment of the second time domain location of the transmission cycle, sending, by the control module to the PMA layer entity, indication information indicating to stop receiving data.

16. The method according to claim 14 or 15, wherein the control module is located at a physical layer device PHYSICAL LAYER DEVICE of the communication apparatus.

17. The method according to any one of claims 3 to 16, wherein
the first data header comprises first indication information, and the first indication information indicates the value of m; and/or
the second data header comprises second indication information, and the second indication information indicates the value of n.

18. The method according to any one of claims 3 to 17, wherein
the first data header comprises at least one of the following:
third indication information, wherein the third indication information indicates an adjustment request of an expected number of codewords;
fourth indication information, wherein the fourth indication information indicates an adjustment acknowledgment of accepting or rejecting an expected number of codewords; or
fifth indication information, wherein the fifth indication information indicates an adjustment commit of an expected number of codewords, and a value of a number of codewords that the communication apparatus expects to send is m; and/or
the second data header comprises at least one of the following:
sixth indication information, wherein the sixth indication information indicates an adjustment request of an expected number of codewords;
seventh indication information, wherein the seventh indication information indicates an adjustment acknowledgment of accepting or rejecting an expected number of codewords; or
eighth indication information, wherein the eighth indication information indicates an adjustment commit of an expected number of codewords, and a value of a number of codewords that the second node expects to send is n.

19. A communication apparatus, comprising a processing unit and a transceiver unit, wherein
the processing unit is configured to determine a transmission cycle, wherein the transmission cycle comprises a first time domain location and a second time domain location that do not overlap each other in time domain, the first time domain location is for carrying data sent by the communication apparatus, and the second time domain location is for carrying data received by the communication apparatus; and
the transceiver unit is configured to send first data at the first time domain location of the transmission cycle, and the transceiver unit is further configured to receive second data at the second time domain location of the transmission cycle.

20. The apparatus according to claim 19, wherein the first data comprises m codewords, the second data comprises n codewords, and both m and n are integers greater than or equal to 1.

21. The apparatus according to claim 20, wherein
the first data further comprises a first data header, and the second data further comprises a second data header, wherein
a time domain length corresponding to the first data header is equal to a time domain length corresponding to the second data header, and/or an amount of data carried by the first data header is equal to an amount of data carried by the second data header.

22. The apparatus according to claim 21, wherein
the transmission cycle further comprises a third time domain location between the first time domain location and the second time domain location, and a time domain length corresponding to the third time domain location is equal to the time domain length corresponding to the first data header.

23. The apparatus according to claim 21 or 22, wherein
the transmission cycle further comprises a fourth time domain location, wherein a start moment of the fourth time domain location is the same as a start moment of the transmission cycle, or an end moment of the fourth time domain location is the same as an end moment of the transmission cycle; and
a time domain length corresponding to the fourth time domain location is equal to the time domain length corresponding to the first data header.

24. The apparatus according to any one of claims 21 to 23, wherein
the amount of the data carried by the first data header is k times a codeword length, k is less than or equal to 0.5, and k is greater than or equal to 0.25.

25. The apparatus according to any one of claims 21 to 24, wherein
in the first data, the m codewords are data obtained through scrambling, and the first data header is data obtained without scrambling; and/or
in the second data, the n codewords are data obtained through scrambling, and the second data header is data obtained without scrambling.

26. The apparatus according to any one of claims 20 to 25, wherein the communication apparatus is a slave node;
the transceiver unit is further configured to receive configuration information from a master node, wherein the configuration information is for determining a value of m and/or a value of n; and
the processing unit is configured to determine the transmission cycle based on the configuration information.

27. The apparatus according to claim 26, wherein the configuration information further comprises:
the time domain length corresponding to the third time domain location, and/or the time domain length corresponding to the fourth time domain location.

28. The apparatus according to any one of claims 19 to 25, wherein the communication apparatus is a master node;
the processing unit is specifically configured to determine the transmission cycle based on port rate information of the communication apparatus.

29. The apparatus according to any one of claims 20 to 28, wherein
m is not equal to n.

30. The apparatus according to any one of claims 20 to 29, wherein
both the m codewords and the n codewords are codewords obtained based on an FEC.

31. The apparatus according to any one of claims 19 to 30, wherein the transceiver unit is specifically configured to:
obtain a MAC frame at the first time domain location of the transmission cycle, and
send the first data based on the MAC frame.

32. The apparatus according to claim 31, wherein the communication apparatus further comprises a MAC layer entity and a PMA layer entity, the transceiver unit comprises a control module, and that the transceiver unit obtains a MAC frame at the first time domain location of the transmission cycle comprises:
at a start moment of the first time domain location of the transmission cycle, sending, by the control module to the MAC layer entity, indication information indicating the MAC layer entity to send data, and sending, by the control module to the PMA layer entity, indication information indicating the PMA layer entity to send data;
after the start moment of the first time domain location of the transmission cycle and before an end moment of the first time domain location of the transmission cycle, receiving, by the control module, the MAC frame from the MAC layer entity; and
at the end moment of the first time domain location of the transmission cycle, sending, by the control module to the MAC layer entity, indication information indicating the MAC layer entity to stop sending data, and sending, by the control module to the PMA layer entity, indication information indicating the PMA layer entity to stop sending data.

33. The apparatus according to any one of claims 19 to 32, wherein the communication apparatus further comprises the PMA layer entity, the transceiver unit comprises the control module, and that the communication apparatus receives second data at the second time domain location of the transmission cycle comprises:
at a start moment of the second time domain location of the transmission cycle, sending, by the control module to the PMA layer entity, indication information indicating to receive data;
after the start moment of the second time domain location of the transmission cycle and before an end moment of the second time domain location of the transmission cycle, receiving, by the PMA layer entity, the second data; and
at the end moment of the second time domain location of the transmission cycle, sending, by the control module to the PMA layer entity, indication information indicating to stop receiving the data.

34. The apparatus according to claim 32 or 33, wherein the transceiver unit is located at a physical layer device PHYSICAL LAYER DEVICE of the communication apparatus.

35. The apparatus according to any one of claims 20 to 34, wherein
the first data header comprises first indication information, and the first indication information indicates the value of m; and/or
the second data header comprises second indication information, and the second indication information indicates the value of n.

36. The apparatus according to any one of claims 20 to 35, wherein
the first data header comprises at least one of the following:
third indication information, wherein the third indication information indicates an adjustment request of an expected number of codewords;
fourth indication information, wherein the fourth indication information indicates an adjustment acknowledgment of accepting or rejecting an expected number of codewords; or
fifth indication information, wherein the fifth indication information indicates an adjustment commit of an expected number of codewords, and a value of a number of codewords that the communication apparatus expects to send is m; and/or
the second data header comprises at least one of the following:
sixth indication information, wherein the sixth indication information indicates an adjustment request of an expected number of codewords;
seventh indication information, wherein the seventh indication information indicates an adjustment acknowledgment of accepting or rejecting an expected number of codewords; or
eighth indication information, wherein the eighth indication information indicates an adjustment commit of an expected number of codewords, and a value of a number of codewords that the second node expects to send is n.

37. A communication apparatus, comprising at least one processor and a memory coupled to the at least one processor, wherein
the memory is configured to store a program or instructions; and
the at least one processor is configured to execute the program or the instructions, to cause the communication apparatus to implement the method according to any one of claims 1 to 18.

38. A computer-readable storage medium, comprising a program or instructions, wherein when the program or the instructions is/are run on a computer, the method according to any one of claims 1 to 18 is performed.
